(19) Europäisches Patentamt / European Patent Office / Office européen des brevets

(11) **EP 4 553 986 A1**

(12) **EUROPEAN PATENT APPLICATION**
published in accordance with Art. 153(4) EPC

(43) Date of publication:
14.05.2025 Bulletin 2025/20

(21) Application number: 23835622.4

(22) Date of filing: 07.07.2023

(51) International Patent Classification (IPC):
$H01M\ 50/463^{(2021.01)}$    $H01M\ 10/0566^{(2010.01)}$
$H01M\ 50/403^{(2021.01)}$    $H01M\ 50/414^{(2021.01)}$
$H01M\ 50/434^{(2021.01)}$    $H01M\ 50/443^{(2021.01)}$
$H01M\ 50/449^{(2021.01)}$    $H01M\ 50/451^{(2021.01)}$
$H01M\ 50/457^{(2021.01)}$    $H01M\ 50/46^{(2021.01)}$
$H01M\ 50/489^{(2021.01)}$

(52) Cooperative Patent Classification (CPC):
H01M 10/0566; H01M 50/403; H01M 50/414;
H01M 50/434; H01M 50/443; H01M 50/449;
H01M 50/451; H01M 50/457; H01M 50/46;
H01M 50/463; H01M 50/489; Y02E 60/10

(86) International application number:
PCT/JP2023/025323

(87) International publication number:
WO 2024/010091 (11.01.2024 Gazette 2024/02)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 08.07.2022 JP 2022110806

(71) Applicant: Asahi Kasei Battery Separator
Corporation
Tokyo 100-0006 (JP)

(72) Inventors:
• KOISHI, Satoshi
  Tokyo 100-0006 (JP)
• NAKAGAWA, Yoshitaka
  Tokyo 100-0006 (JP)
• TANAKA, Yuma
  Tokyo 100-0006 (JP)

(74) Representative: dompatent von Kreisler Selting
Werner -
Partnerschaft von Patent- und Rechtsanwälten
mbB
Deichmannhaus am Dom
Bahnhofsvorplatz 1
50667 Köln (DE)

(54) **SEPARATOR FOR POWER STORAGE DEVICE**

(57) Provided is a separator (1) for a power storage device, the separator comprising a base material and a thermoplastic polymer-containing layer that is formed on at least one surface of the base material and that contains a thermoplastic polymer, wherein the thermoplastic polymer includes a particulate polymer (2); the thermoplastic polymer-containing layer has a dot pattern; and, on a cross section passing through the center of the dot pattern, the ratio ($R_{X>5/X\geq1}$) of a region in which more than 5 layers of the particulate polymer (2) are laminated to a region in which one or more layers of the particulate polymer (2) are present is 30% or less.

Fig. 1

2

X=1
X: NUMBER OF LAYERS

$1 < X \leq 2$

$2 < X \leq 3$

EP 4 553 986 A1

**Description**

FIELD

The present invention relates to a separator for an electricity storage device.

BACKGROUND

Electricity storage devices such as non-aqueous electrolyte solution batteries have been undergoing active development in recent years. Non-aqueous electrolyte solution batteries such as lithium ion batteries usually have a microporous membrane provided as a separator between positive and negative electrodes. Such separators have the function of preventing direct contact between the positive and negative electrodes, while also allowing ions to pass through the electrolyte solution that is held in the micropores.

A separator must exhibit conventionally required safety features including rapid termination of battery reaction upon abnormal heating (fuse characteristics), and shape maintenance even at high temperatures to prevent the danger of the positive electrode substance and negative electrode substance undergoing direct reaction (short circuit characteristics), as well as increased adhesiveness with the electrodes from the viewpoint of obtaining uniform charge-discharge current and inhibiting lithium dendrites.

In addition to safety and adhesiveness with the electrodes, coating and stacking of a functional layer to the microporous membrane have been investigated to impart various functions to the separators (PTLs 1 to 6).

For example, PTL 1 describes forming a thermoplastic polymer-containing layer in a dot-shaped pattern on at least one surface of a microporous membrane as the separator substrate, and adjusting the dot average thickness, dot diameter and dot distance, from the viewpoint of improving the handleability and adhesion when the battery is wound, and lithium ion permeability.

PTL 2 describes coating a separator substrate with an inorganic particle-containing porous layer in a dot-shaped pattern, and adjusting the average diameter of the dots and the dot distance, in order to improve the situation in which electrodes become separated from a porous coating layer-provided separator, and inorganic particles in the porous coating layer become dissociated.

PTL 3 focuses on technology for improving absorption of the electrolyte solution into the electrodes when using an adhesive separator in a battery, by allowing the electrolyte solution to permeate to the center of the positive electrode or negative electrode, but when referring to the dot-shaped pattern coating of an adhesive layer onto the separator substrate, the publication only mentions the dot average thickness, maximum dot diameter and the dot arrangement pitch.

PTL 4 describes a secondary battery having a separator with an adhesive layer coated over the entire porous substrate, wherein the separator has an acrylic adhesive layer formed on at least one surface of the porous substrate from the viewpoint of inhibiting increase in resistance inside the secondary battery, and it shows the dot-shaped pattern of the adhesive layer in the drawing.

PTL 5 and PTL 6 describe forming an acrylic pressure-sensitive adhesive layer with numerous dots arranged at prescribed spacings on the surface of a porous coating layer having inorganic particles in the porous coating layer, from the viewpoint of inhibiting reduction in binding force between the electrodes and the separator.

[CITATION LIST]

[PATENT LITERATURE]

[PTL 1] WO 2014/017651 A
[PTL 2] JP 2011-512005 W
[PTL 3] WO 2020/067208 A
[PTL 4] JP 2018-535534 W
[PTL 5] JP 2015-99777 A
[PTL 6] JP 2015-99776 A

SUMMARY

[TECHNICAL PROBLEM]

When a separator that includes a microporous membrane as the separator substrate and an adhesive layer disposed on at least one side of the microporous membrane is used for cell assembly of an electricity storage device, a decrease in capacity due to an increase in resistance or a decrease in energy density due to an increase in thickness of the separator-electrode wound body may occur.

However, conventional separators for an electricity storage device, comprising a microporous membrane as a substrate and an adhesive layer having a predetermined average thickness formed in a dot-shaped pattern on the substrate, had room for improvement in terms of inhibiting a decrease in capacity and a decrease in energy density due to an increase in resistance of the electricity storage device.

In view of the above problems, it is an object of the present invention to provide a separator for an electricity storage device that can inhibit a decrease in capacity or a decrease in energy density due to an increase in resistance of the electricity storage device.

[SOLUTION TO PROBLEM]

The present inventors have intensively studied and found that the above problems can be solved by specifying the number of layers of thermoplastic polymer-containing layers stacked in a dot-shaped pattern on at least one surface of a substrate, or the number or filling form of thermoplastic polymer particles, thereby completing the present invention. The aspects of the present invention are listed below.

(1) A separator for an electricity storage device, comprising a substrate and a thermoplastic polymer-containing layer containing a thermoplastic polymer formed on at least one surface of the substrate, wherein

the thermoplastic polymer contains a particulate polymer,
the thermoplastic polymer-containing layer has a dot-shaped pattern, and
in a cross section passing through a center of the dot-shaped pattern, a ratio ($R_{X > 5 / X \geq 1}$) of a region where more than five layers of the particulate polymer are stacked to a region where one or more layers of the particulate polymer are present is 30% or less.

(2) A separator for an electricity storage device, comprising a substrate and a thermoplastic polymer-containing layer containing a thermoplastic polymer formed on at least one surface of the substrate, wherein

the thermoplastic polymer contains a particulate polymer,
the thermoplastic polymer-containing layer has a dot-shaped pattern, and
in a cross section passing through a center of the dot-shaped pattern, a ratio ($R_{1 < X \leq 3 / X \geq 1}$) of a region where more than one and three or less layers of the particulate polymer are stacked to a region where one or more layers of the particulate polymer are present is 40% or more and 100% or less.

(3) The separator for an electricity storage device according to item 1 or 2, wherein, in the cross section passing through the center of the dot-shaped pattern, a ratio ($R_{0 < X \leq 1 (X = 1) / X \geq 1}$) of a region where one layer of the particulate polymer is stacked to a region where one or more layers of the particulate polymer are present is 50% or less.

(4) The separator for an electricity storage device according to any one of items 1 to 3, wherein, in the cross section passing through the center of the dot-shaped pattern, when a ratio ($R_{1 < X \leq 2 / X \geq 1}$) of a region where more than one and two or less layers of the particulate polymer are stacked to a region where one or more layers of the particulate polymer are present is A, and a ratio ($R_{0 < X \leq 1 (X = 1) / X \geq 1}$) of a region where one layer of the particulate polymer is stacked to a region where one or more layers of the particulate polymer are present is B, a ratio of B to A ($R_{0 < X \leq 1 (X = 1) / X \geq 1} / R_{1 < X \leq 2 / X \geq 1}$) is 0 or more and 1 or less.

(5) The separator for an electricity storage device according to any one of items 1 to 4, wherein, in the cross section passing through the center of the dot-shaped pattern, a ratio ($R_{n < X \leq n + 1 / X \geq 1}$) of a region where more than n and (n+1) or less layers of the particulate polymer are stacked to a region where one or more layers of the particulate polymer are present satisfies the following formula:

$$(R_{1 < X \leq 2 / X \geq 1}) \geq (R_{0 < X \leq 1 (x = 1) / X \geq 1}) \geq (R_{2 < X \leq 3 / X \geq 1}) \geq (R_{n < X \leq n + 1 / X \geq 1})$$

{where n is an integer of 3 or more}.

(6) The separator for an electricity storage device according to any one of items 1 to 5, wherein the particulate polymer has an average particle size of 0.10 $\mu$m or more and 0.80 $\mu$m or less.

(7) The separator for an electricity storage device according to any one of items 1 to 6, wherein the thermoplastic polymer has at least two glass transition temperatures, at least one of the glass transition temperatures is within a range of lower than 20°C, and at least one of the glass transition temperatures is within a range of 40°C or higher and 110°C or lower.

(8) The separator for an electricity storage device according to any one of items 1 to 7, wherein a total coverage area ratio of the thermoplastic polymer to the at least one surface of the substrate is 3% or more and 60% or less.

(9) The separator for an electricity storage device according to any one of items 1 to 8, wherein a basis weight of the thermoplastic polymer-containing layer on the at least one surface is 0.03 g/m$^2$ to 0.5 g/m$^2$ .

(10) The separator for an electricity storage device according to any one of items 1 to 9, wherein a porous layer containing an inorganic filler and a resin binder is formed between the at least one surface of the substrate and the thermoplastic polymer-containing layer.

(11) The separator for an electricity storage device according to item 10, wherein the porous layer has a pore size of 0.03 $\mu$m or more and 0.40 $\mu$m or less.

(12) The separator for an electricity storage device according to any one of items 1 to 11, wherein a ratio of a thickness of the thermoplastic polymer-containing layer to a thickness of the substrate or to a thickness of the substrate and the porous layer is 0.10 or more and 0.40 or less.

(13) The separator for an electricity storage device according to any one of items 1 to 12, wherein the thermoplastic polymer-containing layer is provided on both sides of the substrate, a sum of maximum heights of the dots on the both sides is 0.2 $\mu$m or more and 4.5 $\mu$m or less, and a difference between the maximum heights of the dots on both sides is more than 0.0 $\mu$m and 1.0 $\mu$m or less.

(14) A method for producing a separator for an electricity storage device, comprising the steps of:

preparing a substrate, and
applying a coating solution containing a thermoplastic polymer onto at least one surface of the substrate to form a thermoplastic polymer-containing layer, wherein
the coating solution has a solid content of 6% by weight or more and 35% by weight or less based on the total weight of the coating solution, a viscosity of 10 mPa·s or more and 100 mPa·s or less, a surface tension of 10 mN/m or more and 45 mN/m or less, and a pH of 6 or more and 10 or less.

(15) The method for producing a separator for an electricity storage device according to item 14, further comprising, between the steps of preparing a substrate and forming a thermoplastic polymer-containing layer, applying another coating solution containing inorganic particles onto the substrate surface to form an inorganic particle-containing layer.

(16) An electricity storage device comprising a positive electrode, a negative electrode, the separator for an electricity storage device according to any one of items 1 to 13, and a non-aqueous electrolyte solution, wherein the separator for an electricity storage device is disposed such that a side having the porous layer faces the positive electrode with respect to the substrate.

[ADVANTAGEOUS EFFECTS OF INVENTION]

According to the present invention, it is possible to provide a separator that can inhibit a decrease in capacity and/or a decrease in energy density due to an increase in resistance of the electricity storage device.

BRIEF DESCRIPTION OF DRAWINGS

FIG. 1 is a schematic diagram for explaining how to determine the ratio of a region where a particulate polymer is present and a region where the particulate polymer is stacked.
FIG. 2 is a schematic cross-sectional view of a separator according to one embodiment of the present invention.
FIG. 3 is a schematic plan in which a region where a thermoplastic polymer is present is defined for explaining a dot-shaped pattern according to one embodiment of the present invention.

DESCRIPTION OF EMBODIMENTS

Hereinafter, embodiments for carrying out the invention (hereinafter referred to as "embodiment") will be described in detail. It is to be understood, incidentally, that the invention is not limited to the embodiment described below and may incorporate various modifications within the scope of the gist thereof.

<Separator for Electricity Storage Device>

The separator for an electricity storage device according to the present embodiment (hereinafter also referred to simply as "separator") comprises a substrate and a thermoplastic polymer-containing layer containing a thermoplastic polymer formed on at least one side of the substrate surface, wherein the thermoplastic polymer contains a particulate polymer, and the thermoplastic polymer-containing layer has a dot-shaped pattern.

The separator may have the thermoplastic polymer-containing layer on the substrate surface of one or both sides of the substrate, and if desired it may also have a porous layer between the substrate surface and the thermoplastic polymer-containing layer, or on the substrate surface where the thermoplastic polymer-containing layer is not formed.

(Dot-Shaped Pattern of Thermoplastic Polymer-Containing Layer)

The term "dot-shaped" means that there are portions including the thermoplastic polymer and portions including no thermoplastic polymer on the substrate, the portions including the thermoplastic polymer being present as islands.

The thermoplastic polymer-containing portions of the thermoplastic polymer-containing layer may also be independent.

When the thermoplastic polymer-containing layer has a specific dot-shaped pattern, the separator has excellent resistance inhibition and injectability. Herein, the injectability refers to the ease with which an electrolyte permeates into electrodes and separators during an electrolyte injection process in assembling cells for an electricity storage device that uses a separator, and is expressed as the shortness of time required from the start of injection to the completion of permeation. From the viewpoint of improving the injectability, the thermoplastic polymer-containing portions of the thermoplastic polymer-containing layer is preferably independent.

(First Embodiment)

In a cross section passing through the center of the dot-shaped pattern of the thermoplastic polymer-containing layer according to the first embodiment, a ratio ($R_{X > 5} / X \geq 1$) of a region where more than five layers of the particulate polymer are stacked to a region where one or more layers of the particulate polymer are present is 30% or less, preferably 20% or less, and more preferably 10% or less.

In the first embodiment, when the number of layers in which the particulate polymer is present is defined as X, by optimizing above ratio ($R_{X > 5} / X \geq 1$) so as to satisfy 30% or less, it is possible to control the height of the thermoplastic polymer-containing layer and to inhibit the formation of a coffee ring of the thermoplastic polymer-containing layer. This makes it possible to inhibit a decrease in capacity due to an increase in resistance of the electricity storage device and/or a decrease in energy density due to an increase in separator membrane thickness or an increase in thickness of the separator-electrode wound body, leading to an improvement in performance of the electricity storage device by making the distance between electrodes in the electricity storage device uniform and narrowing it. Small ratio ($R_{X > 5 / X \geq 1}$) of the region where more than five layers of the particulate polymer are stacked makes it possible to inhibit an increase in the separator thickness and an increase in thickness of the separator-electrode wound body, and to inhibit a decrease in energy density. Presence of at least one layer of a particulate polymer in the thermoplastic polymer-containing layer ($X \geq 1$) makes it possible to exhibit the adhesive force to the electrodes while inhibiting an increase in resistance, and to maintain the distance between the electrodes uniform.

From the viewpoints of further inhibiting an increase in resistance or the membrane thickness of the separator, improving the injectability, and further improving the performance of the electricity storage device, the above ratio ($R_{X > 5 / X \geq 1}$) is more preferably 0% or more and 9% or less, still more preferably 0% or more and 8% or less, and particularly preferably more than 0% and 7% or less.

(Second Embodiment)

In a cross section passing through the center of the dot-shaped pattern of the thermoplastic polymer-containing layer according to the second embodiment, a ratio ($R_{1 < X \leq 3} / X \geq 1$) of a region where more than one and three or less layers of the particulate polymer are stacked to a region where one or more layers of the particulate polymer are present is 40% or more and 100% or less, and preferably 50% or more and 100% or less.

In the second embodiment, when the number of layers in which the particulate polymer is present is X, by optimizing the above ratio ($R_{1 < X \leq 3 / X \geq 1}$) so as to satisfy the range of 40% or more and 100% or less, it is possible to control the height of the thermoplastic polymer-containing layer and to inhibit the formation of a coffee ring in the thermoplastic polymer-containing layer. This makes it possible to inhibit a decrease in capacity due to an increase in resistance of the electricity storage device and/or a decrease in energy density due to an increase in separator membrane thickness or an increase in thickness of the separator-electrode wound body, leading to an improvement in performance of the electricity storage device by making the distance between electrodes in the electricity storage device uniform and narrowing it.

From the viewpoints of further inhibiting an increase in resistance or membrane thickness of the separator, improving the injectability, and further improving the performance of the electricity storage device, the above ratio ($R_{1 < X \leq 3 /X \geq 1}$) is more preferably more than 50% and less than 100%, still more preferably 52% or more and less than 100%, and particularly preferably 54% or more and 95% or less.

(Ratio of Region Where Particulate Polymer is present and Region Where Particulate Polymer is stacked)

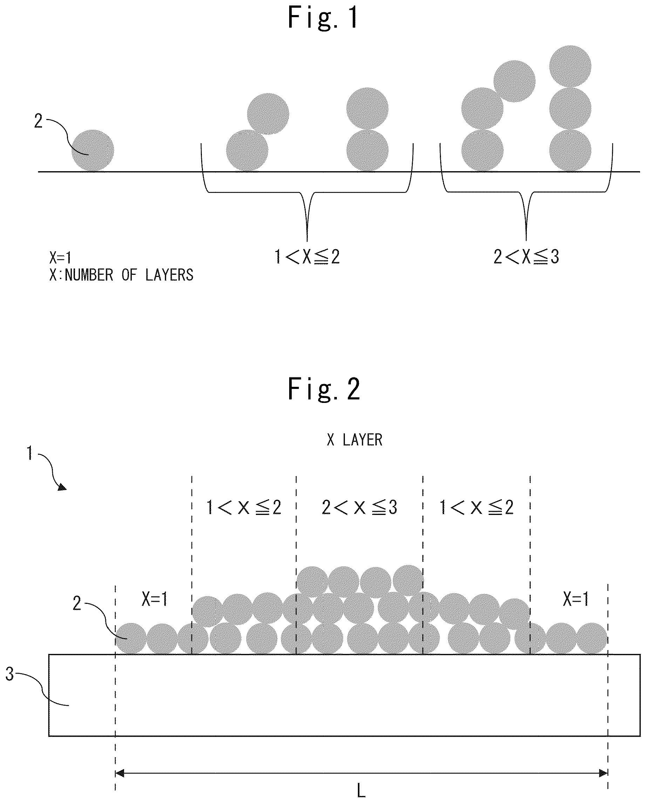

The ratio of a region where particulate polymer is present and a region where particulate polymer is stacked will be described below with reference to FIG. 1 and FIG. 2. FIG. 1 is a schematic diagram for explaining how to determine the ratio of a region where a particulate polymer (2) is present and a region where the particulate polymer is stacked, and FIG. 2 is a schematic cross-sectional view of a separator (1) according to the first or second embodiment.

The center of the pattern may be, for example, the center of one dot in a top view of the polymer-containing layer.

When observing a cross section passing through the center of a dot-shaped pattern, the following constraints shall be observed:

X is the number of layers;

Particles in the depth are not counted;

The boundaries of the observation length shall be divided so that one entire particle remains (i.e., so that no part of a particle remains);

The maximum height of a dot containing a particulate polymer is the maximum thickness of the dot; and

When multiple particulate polymers overlap in the vertical direction, the multiple particulate polymers are assumed to be closely packed or to be in contact with each other in the vertical direction.

For example, two particulate polymers (2, 2) can be close packed ($1 < X < 2$) or vertically adjacent ($X = 2$) as shown in FIG. 1, the three particulate polymers (2, 2, 2) may be completely in contact with each other in the vertical direction ($X = 3$) or may be closely packed to satisfy $1 < X \leq 2$ or $2 < X < 3$. In the case of four particulate polymers, five particulate polymers, or six or more particulate polymers (not shown), stacking may occur in the same manner as above.

Herein, in a region where one or more layers of the particulate polymer are present, at least one particle is present as a primary particle of the particulate polymer, so that there is always one or more layers (i.e., there is no concept of 0.5 layer or less). As shown in FIG. 1, when the number of layers in which the particulate polymer (2) is present is X, $X = 1$ in a region where one layer of the particulate polymer (2) is present.

As shown in FIG. 2, when one cross section passing through the center of one dot is observed at a magnification sufficient to measure the number of layers of the thermoplastic polymer (for example, a magnification of 5,000 times in SEM observation at 1.0 kV), the length of the region where the particulate polymer (2) is present in one visual field, that is, the length of the continuous region where one or more layers ($X \geq 1$) of the particulate polymer (2) are present in one visual field, is defined as the observation length L of the region. The total length refers to the total observed length L when a cross section passing through the center of a dot is observed over the entire dot diameter at a magnification sufficient to measure the number of thermoplastic polymer layers (for example, a magnification of 5,000 times for SEM observation at 1.0 kV). There may be a region where the particulate polymer (2) is not present within the dot diameter, and from the viewpoint of achieving both the development of appropriate adhesive force and injectability, the ratio of the total length/dot diameter is preferably 30% or more and 90% or less, more preferably 35% or more and 80% or less, and still more preferably 40% or more and 70% or less.

An example of how to determine the ratio ($R_{X > 5 / X \geq 1}$) is as follows: a cross section passing through the center of a dot-shaped pattern is observed by SEM. The length of the region where five or more layers of the particulate polymer are stacked is determined relative to the length of the region where one or more layers of the particulate polymer are present, and the ratio is determined according to the following formula.

$R_{X > 5 / X \geq 1}$ = {length of region where five or more layers of particulate polymer are stacked/length of region where particulate polymer is present} $\times$ 100 (%)

An example of how to determine the ratio ($R_{1 < X \leq 3 / X \geq 1}$) is as follows: a cross section passing through the center of a dot-shaped pattern is observed by SEM. The length of the region where more than one layer of particulate polymer is present and three or less layers of particulate polymer are stacked is determined relative to the length of the region where one or more layers of particulate polymer are present, and the ratio is determined according to the following formula.

$R_{1 < X \le 3 / X \ge 1}$ = {length of region where particulate polymer is stacked in layers of one or more and three or less layers/length of region where particulate polymer is present} $\times$ 100 (%)

The length direction of the region where the particulate polymer is present is preferably at least the MD direction (the machine direction of the microporous membrane), and more preferably the MD and TD directions (directions crossing the MD of the microporous membrane at an angle of 90°), from the viewpoint of controlling variation in length.

The ratio according to the first embodiment ($R_{X > 5 / X \ge 1}$) and the ratio according to the second embodiment ($R_{1 < X \le 3 / X \ge 1}$) can be combined.

In the first embodiment and/or the second embodiment, from the viewpoints of further inhibiting an increase in resistance or membrane thickness of the separator, enhancing the injectability, and further improving the performance of the electricity storage device, in a cross section passing through the center of the dot-shaped pattern, the ratio ($R_{0 < X \le 1 (X = 1) / X \ge 1}$) of the region where one layer of particulate polymer is stacked to the region where one or more layers of particulate polymer is present is preferably 50% or less, more preferably 0% or more and 45% or less, still more preferably 1% or more and 40% or less, and particularly preferably 2% or more and 38% or less.

In the first embodiment and/or the second embodiment, from the viewpoints of further inhibiting an increase in resistance or membrane thickness of the separator, improving the injectability, and further improving the performance of the electricity storage device, when the ratio ($R_{1 < X \le 2 / X \ge 1}$) of a region where more than one and two or less layers of the particulate polymer are stacked to a region where one or more layers of the particulate polymer are present is A, and a ratio ($R_{0 < X \le 1 (X = 1) / X \ge 1}$) of a region where one layer of the particulate polymer is stacked to a region where one or more layers of the particulate polymer are present is B, a ratio of B to A ($R_{0 < X \le 1 (X = 1) / X \ge 1} / R_{1 < X \le 2 / X \ge 1}$) is 0 or more and 1 or less, and more preferably is more than 0 and 1 or less.

In the first and/or second embodiments, from the viewpoints of further inhibiting an increase in resistance or membrane thickness of the separator, improving the injectability, and further improving the performance of the electricity storage device, in a cross section passing through the center of the dot-shaped pattern, the ratio ($R_{n < X \le n + 1 / X \ge 1}$) of the region where the particulate polymer is stacked in more than n and (n+1) or less layers to the region where one or more layers of the particulate polymer are present preferably satisfies the relationship represented by the following formula:

$$(R_{1 < X \le 2 / X \ge 1}) \ge ((R_{0 < X \le 1 (X = 1) / X = 1}) \text{ and } (R_{2 < X \le 3 / X \ge 1})) \ge (R_{n < X \le n+1 / X \ge 1})$$

where n is a positive integer of 3 or more, and more preferably the relationship represented by the following formula:

$$(R_{1 < X \le 2 / X \ge 1}) \ge (R_{0 < X \le 1 (X = 1) / X \ge 1}) \ge (R_{2 < X \le 3 / X \ge 1}) \ge (R_{n < X \le n + 1 / X \ge 1})$$

where n is a positive integer of 3 or more. From the viewpoint of inhibiting the problem of blocking, which refers to adhesion between separators, it is preferable that the sum of ($R_{1 < X \le 2 / X \ge 1}$), ($R_{0 < X \le 1 (X = 1) / X \ge 1}$), and ($R_{2 < X \le 3 / X \ge 1}$) exceeds 50%.

The ratio of the region where the particulate polymer is present and the region where the particulate polymer is stacked as described above can be achieved, for example, in the separator production process by controlling the solid concentration, particle size distribution, viscosity or surface tension of the coating solution containing the particulate polymer; the number of binder particles per unit volume of the coating solution droplet; the penetration of the coating solution into the substrate side; the pore size and wettability of the substrate or backing layer; and the inhibition of the formation of a coffee ring.

(Dot-Shaped Pattern)

When there are thermoplastic polymer-containing layers on both sides of the substrate, it is preferable that the sum of the maximum heights of the dots on both sides is 0.2 $\mu$m or more and 4.5 $\mu$m or less, and/or the difference in the maximum heights of the dots on both sides is more than 0.0 $\mu$m and less than 1.0 $\mu$m. When the maximum height of the dots on both sides is adjusted as mentioned above, the height of the thermoplastic polymer-containing layer becomes easier to control, and it tends to be easier to inhibit a decrease in capacity due to an increase in resistance of the electricity storage device, and/or a decrease in energy density due to an increase in separator membrane thickness or an increase in thickness of the separator-electrode wound body. Taking this tendency into consideration, it is more preferable that the total maximum height of the dots on both sides is 0.5 $\mu$m or more and 3.5 $\mu$m or less, and/or the difference in maximum height of the dots on both sides is more than 0.0 $\mu$m and 0.5 $\mu$m or less.

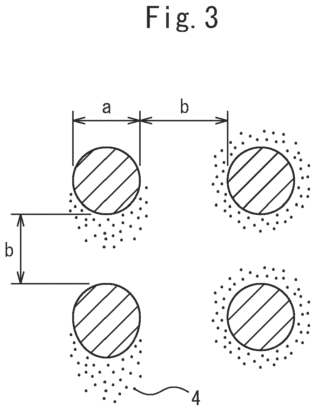

From the viewpoint of the adhesion or injectability of the separator, the dot diameter of the thermoplastic polymer-containing layer is preferably 20 $\mu$m or more and 1,000 $\mu$m or less, more preferably 50 $\mu$m or more and 800 $\mu$m or less, still more preferably 100 $\mu$m or more and 700 $\mu$m or less, particularly preferably 145 $\mu$m or more and 600 $\mu$m or less, and most

preferably 150 μm or more and 600 μm or less. The dot diameter is indicated as the "a" as shown in FIG. 3.

In relation to multiple dots, each dot may be controlled to have a uniform, predetermined diameter, or each dot may have a different diameter, but it is preferable that each dot is controlled to have a uniform, predetermined diameter.

From the viewpoint of the air release property or injectability of the separator, the dot distance in the thermoplastic polymer-containing layer is preferably 50 μm or more, more preferably 100 μm or more and 3,000 μm or less, still more preferably 200 μm or more and 2,500 μm or less, still more preferably 400 μm or more and 2,000 μm or less, and particularly preferably 501 μm or more and 1,500 μm or less. The dot distance refers to the distance "b" between two different dots that are closest to each other, as shown in FIG. 3.

The dot distance may be controlled to a predetermined distance so that the distance between individual dots is regular, or may be controlled to be different so that the dot-shaped pattern has an irregular pattern, but it is preferable that the distance between individual dots is controlled to a predetermined distance so that the dot-shaped pattern has a regular pattern.

As shown in FIG. 3, the dots refer to the shaded areas where the particulate polymer is continuously present, and the thermoplastic polymer or particulate polymer scattered outside the shaded areas is regarded as a particle scattering region (4), and the dot diameter and the dot distance are calculated based on the shaded areas.

From the viewpoints of obtaining an excellent balance between adhesive force with the electrodes and injectability of the electrolyte solution, the dot distance/dot diameter ratio in the thermoplastic polymer-containing layer is preferably 0.5 or more and 4 or less, more preferably 0.7 or more and 3.8 or less, still more preferably 1 or more and 3.5 or less, and particularly preferably 2 or more and 3.3 or less.

From the viewpoints of the distance between the separator and the electrode and the wettability of the separator, the average dot height of the dot-shaped pattern of the thermoplastic polymer-containing layer is preferably 0.2 μm or more and 10 μm or less, more preferably 0.4 μm or more and 10 μm or less, still more preferably 0.5 μm or more and 4 μm or less, yet more preferably 0.5 μm or more and 3 μm or less, and particularly preferably 1 μm or more and 3 μm or less.

From the viewpoint of obtaining satisfactory air leakage, the positioning angle of the dots in the thermoplastic polymer-containing layer is preferably less than 40°, and while the lower limit for the positioning angle is not particularly limited it may be, for example, 0° or more.

The dot-shaped pattern of the thermoplastic polymer-containing layer specified above can be achieved, for example, in the separator production process, by optimizing the thermoplastic polymer-containing coating solution, adjusting the polymer concentration or coating amount of the coating solution and the coating method or coating conditions, or by devising a printing plate.

Hereinafter, constituent elements of the separator of the present embodiment will be described.

[Thermoplastic Polymer-Containing Layer]

The thermoplastic polymer-containing layer according to the present embodiment includes a thermoplastic polymer. The thermoplastic polymer layer contains a particulate polymer.

[Contact Angle between Thermoplastic Polymer-Containing Layer and Electrolyte Solution]

From the viewpoints of excellent injectability of the electrolyte solution, resistance to pooling of air and a shorter injection time, the contact angle of the thermoplastic polymer-containing layer with the electrolyte solution is preferably 0° or more and 20° or less, more preferably 2° or more and 18° or less, and still more preferably 4° or more and 16° or less. The contact angle of the thermoplastic polymer-containing layer with the electrolyte solution is preferably within the numerical range mentioned above on the side of the thermoplastic polymer-containing layer on which the dot-shaped pattern is formed.

The contact angle of the thermoplastic polymer-containing layer with the electrolyte solution can be adjusted to within the range specified above by, for example, controlling the total coverage area ratio of the thermoplastic polymer on the substrate surface, the particle size of the thermoplastic polymer, the strength of corona treatment on the substrate surface, the drying speed, the coating material viscosity and the coating material pH, during the process of forming the thermoplastic polymer-containing layer.

(Thermoplastic Polymer)

The thermoplastic polymer used for the present embodiment is not particularly limited, and examples include polyolefin resins such as polyethylene, polypropylene and α-polyolefin; fluorine-containing resins such as polyvinylidene fluoride and polytetrafluoroethylene and copolymers including them; diene-based polymers having conjugated dienes such as butadiene or isoprene as monomer units, or copolymers and hydrides including them; acrylic polymers having acrylic acid esters or methacrylic acid esters as monomer units, or their copolymers or hydrides; rubber compounds such as ethylene-propylene rubber, polyvinyl alcohol and vinyl polyacetate; cellulose derivatives such as ethyl cellulose, methyl cellulose, hydroxyethyl cellulose and carboxymethyl cellulose; and resins having a melting point and/or glass transition temperature of 180°C or higher, such as polyphenylene ether, polysulfone, polyethersulfone, polyphenylene sulfide, polyetherimide, polyamideimide, polyamide and polyester compounds, and their blends. Monomers to be used for synthesis of thermoplastic polymers include monomers having a hydroxyl group, a sulfonic acid group, a carboxyl group, an amide group, or a cyano group.

Preferred among these thermoplastic polymers are diene-based polymers, acrylic polymers and fluorine-based polymers, for their excellent bondability with electrode active materials and excellent strength or flexibility.

(Diene-Based Polymers)

Diene-based polymers are not particularly limited, and examples include polymers that include monomer units obtained by polymerization of conjugated dienes having two conjugated double bonds, such as butadiene or isoprene. Conjugated diene monomers are not particularly limited, and examples include 1,3-butadiene, isoprene, 2,3-dimethyl-1,3-butadiene, 2-phenyl-1,3-butadiene, 1,3-pentadiene, 2-methyl-1,3-pentadiene, 1,3-hexadiene, 4,5-diethyl-1,3-octadiene and 3-butyl-1,3-octadiene. Any of these may be polymerized alone, or they may be copolymerized.

The proportion of a monomer unit obtained by polymerization of a conjugated diene in the diene-based polymer is not particularly limited, but it may be 40% by weight or more, preferably 50% by weight or more, and more preferably 60% by weight or more, of the total diene-based polymer.

The diene-based polymer is not particularly limited, and examples include homopolymers of conjugated dienes such as poly butadiene and polyisoprene, and copolymers with monomers that are copolymerizable with conjugated dienes. Such a copolymerizable monomer is not particularly limited, and may be any of the (meth)acrylate monomers or monomers mentioned below (hereinafter also referred to as "other monomers").

The "other monomers" are not particularly limited, and examples include $\alpha,\beta$-unsaturated nitrile compounds such as acrylonitrile and methacrylonitrile; unsaturated carboxylic acids such as acrylic acid, methacrylic acid, itaconic acid and fumaric acid; styrene-based monomers such as styrene, chlorostyrene, vinyltoluene, t-butylstyrene, vinylbenzoic acid, methyl vinylbenzoate, vinylnaphthalene, chloromethylstyrene, hydroxymethylstyrene, $\alpha$-methylstyrene and divinylbenzene; olefins such as ethylene and propylene; halogen atom-containing monomers such as vinyl chloride and vinylidene chloride; vinyl esters such as vinyl acetate, vinyl propionate, vinyl butyrate and vinyl benzoate; vinyl ethers such as methyl vinyl ether, ethyl vinyl ether and butyl vinyl ether; vinyl ketones such as methyl vinyl ketone, ethyl vinyl ketone, butyl vinyl ketone, hexyl vinyl ketone and isopropenyl vinyl ketone; heterocyclic ring-containing vinyl compounds such as N-vinylpyrrolidone, vinylpyridine and vinylimidazole; acrylic acid ester and/or methacrylic acid ester compounds such as methyl acrylate and methyl methacrylate; hydroxyalkyl group-containing compounds such as $\beta$-hydroxyethyl acrylate and $\beta$-hydroxyethyl methacrylate; and amide-based monomers such as acrylamide, N-methylolacrylamide and acrylamide-2-methylpropanesulfonic acid, any one of which may be used alone or in combinations of two or more thereof.

(Acrylic Polymers)

Acrylic polymers are not particularly limited, but are preferably polymers including a monomer unit obtained by polymerization of a (meth)acrylate monomer.

Herein, "(meth)acrylic acid" means "acrylic acid or methacrylic acid", and "(meth)acrylate" means "acrylate or methacrylate".

(Meth)acrylate monomers are not particularly limited, and examples include alkyl (meth)acrylates such as methyl (meth)acrylate, ethyl (meth)acrylate, n-propyl (meth)acrylate, isopropyl (meth)acrylate, n-butyl (meth)acrylate, t-butyl (meth)acrylate, pentyl (meth)acrylate, hexyl (meth)acrylate, heptyl (meth)acrylate, octyl (meth)acrylate, 2-ethylhexyl (meth)acrylate, nonyl (meth)acrylate, decyl (meth)acrylate, lauryl (meth)acrylate, n-tetradecyl (meth)acrylate and stearyl (meth)acrylate; hydroxyl group-containing (meth)acrylates such as hydroxyethyl (meth)acrylate, hydroxypropyl (meth) acrylate and hydroxybutyl (meth)acrylate; amino group-containing (meth)acrylates such as aminoethyl (meth)acrylate; and epoxy group-containing (meth)acrylates such as glycidyl (meth)acrylate.

The proportion of a monomer unit obtained by polymerization of a (meth)acrylate monomer is not particularly limited, but it may be, for example, 40% by weight or more, preferably 50% by weight or more, and more preferably 60% by weight or more, of the total acrylic polymer. Examples of the acrylic polymer include homopolymers of (meth)acrylate monomers, and copolymers of monomers copolymerizable therewith.

Such copolymerizable monomers include the "other monomers" mentioned above for diene-based polymers, any of which may be used alone or in combinations of two or more thereof.

(Fluorine-Based Polymers)

Fluorine-based polymers are not particularly limited, and examples include vinylidene fluoride homopolymers, and copolymers of monomers that are copolymerizable with them. Fluorine-based polymers are preferred from the viewpoint of electrochemical stability.

The proportion of a monomer unit obtained by polymerization of vinylidene fluoride is not particularly limited, but it may be, for example, 40% by weight or more, preferably 50% by weight or more, and more preferably 60% by weight or more. Monomers that are copolymerizable with vinylidene fluoride are not particularly limited, and examples include fluorine-containing ethylenic unsaturated compounds such as vinyl fluoride, tetrafluoroethylene, trifluorochloroethylene, hexafluoropropylene, hexafluoroisobutylene, perfluoroacrylic acid, perfluoromethacrylic acid, and fluoroalkyl esters of acrylic acid or methacrylic acid; non-fluorinated ethylenic unsaturated compounds such as cyclohexyl vinyl ether and hydroxyethyl vinyl ether; and non-fluorinated diene compounds such as butadiene, isoprene and chloroprene.

Of these fluorine-based polymers, homopolymers of vinylidene fluoride, vinylidene fluoride/tetrafluoroethylene copolymer and vinyliden/fluoride/tetrafluoroethylene/hexafluoropropylene copolymer are preferred. Vinylidene fluoride/tetrafluoroethylene/hexafluoropropylene copolymer is an especially preferred fluorine-based polymer, the monomer composition usually being 30 to 90% by weight vinylidene fluoride, 9 to 50% by weight tetrafluoroethylene and 1 to 20% by weight hexafluoropropylene. Particles of such fluorine resins may be used alone or in combinations of two or more thereof.

Monomers to be used for synthesis of thermoplastic polymers include monomers with a hydroxyl group, a carboxyl group, an amino group, a sulfonic acid group, an amide group, or a cyano group.

Monomers having hydroxy groups are not particularly limited, and may be vinyl-based monomers, such as pentenol.

Monomers having carboxyl groups are also not particularly limited, and examples include vinyl-based monomers such as unsaturated carboxylic acids or pentenoic acids having ethylenic double bonds, such as (meth)acrylic acid or itaconic acid.

Monomers having amino groups are not particularly limited, and include, for example, 2-aminoethyl methacrylate.

Monomers having sulfonic acid groups are not particularly limited, and examples include vinylsulfonic acid, methylvinylsulfonic acid, (meth)allylsulfonic acid, styrenesulfonic acid, ethyl (meth)acrylate-2-sulfonate, 2-acrylamide-2-methylpropanesulfonic acid, 3-allyloxy-2-hydroxypropanesulfonic acid and the like.

Monomers having amide groups are not particularly limited, and examples include acrylamide, methacrylamide, N-methylolacrylamide, N-methylolmethacrylamide and the like.

Monomers having cyano groups are not particularly limited, and examples include acrylonitrile, methacrylonitrile, α-chloroacrylonitrile, α-cyanoethyl acrylate and the like.

The thermoplastic polymer to be used for the present embodiment may be one polymer alone or a blend of two or more polymers, but it preferably includes two or more different polymers. The thermoplastic polymer may also be used together with a solvent, the solvent being one that can uniformly and stably disperse the thermoplastic polymer, such as N-methylpyrrolidone, N,N-dimethylformamide, N,N-dimethyl acetamide, water, ethanol, toluene, hot xylene, methylene chloride or hexane, with aqueous solvents being preferred among these. The thermoplastic polymer may also be used in the form of a latex.

(Glass Transition Temperature of Thermoplastic Polymer)

The glass transition temperature of the thermoplastic polymer is not limited, but can be, for example, within a range of -30°C to 110°C.

From the viewpoints of exhibiting the adhesive force between the separator and electrodes, while also ensuring proper distance between the electrodes and separator in the electricity storage device and shortening the electrolyte solution injection time, the thermoplastic polymer constituting the thermoplastic polymer-containing layer preferably has at least two glass transition temperatures. The thermoplastic polymer has thermal properties, at least one of the glass transition temperatures being within a range of lower than 20°C, and at least one of the glass transition temperatures being within a range of 40°C or higher and 110°C or lower.

When the glass transition temperature of the thermoplastic polymer is lower than 20°C, the adhesive force between the materials is easily exhibited, and in the process in which the separator is handled, failure in the thermoplastic polymer-containing layer and failure of the interface between the substrate and the layer can be prevented, and problems such as powder falling can be inhibited. Furthermore, at least one of the glass transition temperatures of the thermoplastic polymers used is within a range of lower than 20°C, thus exerting the effects of excellent adhesiveness to the microporous membrane, and excellent adhesiveness between the separator and the electrodes. At least one of the glass transition temperatures of the thermoplastic polymers used is preferably within a range of 15°C or lower, and more preferably -30°C or higher and 15°C or lower. The glass transition temperature within a range of lower than 20°C is particularly preferably only within a range of -30°C or higher and 15°C or lower, in order to satisfactorily maintain the handleability while increasing the adhesiveness between the thermoplastic polymer and the microporous membrane.

Meanwhile, by containing a thermoplastic polymer component having a glass transition temperature of 40°C or higher, adhesive force between the separator and the electrodes can be exhibited and, at the same time, the problem of blocking, which refers to adhesion between separators, can be inhibited. Furthermore, since at least one of the glass transition temperatures of the thermoplastic polymers used is within a range of 40°C or higher and 110°C or lower, the material has excellent handleability, and thus the distance between the electrode surface and the separator substrate surface in the electricity storage device can be maintained, and the injection time of the electrolyte solution can be shortened. The glass transition temperature of the component having a higher glass transition temperature is more preferably 45°C or higher and 108°C or lower, still more preferably 50°C or higher and 105°C or lower, yet more preferably 60°C or higher and lower than 105°C, particularly preferably 80°C or higher and lower than 103°C, and most preferably higher than 90°C and lower than 100°C. The glass transition temperature of the thermoplastic polymer is preferably 70°C or higher from the viewpoint of the handleability, as long as the effects of the present invention are not impaired.

The glass transition temperature is determined from a DSC curve obtained by differential scanning calorimetry (DSC). The glass transition temperature may also be referred to herein as "Tg".

Specifically, it is determined by the intersection between a straight line extending the lowtemperature end baseline in the DSC curve toward the high-temperature end, and the tangent line at the inflection point in the stepwise change region of glass transition. More specifically, it may be determined with reference to the method described in the Examples.

The "glass transition" refers to the value when a change in heat quantity accompanying the change in state of a polymer test piece in DSC occurs at the endothermic end. Such a change in heat quantity is observed as a stepwise change in the DSC curve, or a combination of a stepwise change and a peak.

A "stepwise change" is a portion of the DSC curve that moves away from the previous baseline and toward a new baseline. This also includes any combination of a peak and stepwise change.

The "inflection point" is the point at which the slope of the DSC curve is maximum in the stepwise change region. In the stepwise change region, this represents the point where the upwardly convex curve changes to a downwardly convex curve.

The term "peak" refers to a portion of the DSC curve that moves away from the baseline and then returns to the same baseline.

The term "baseline" refers to the DSC curve in the temperature zone where no transition or reaction takes place in the test piece.

The fact that a thermoplastic polymer has two glass transition temperatures can be achieved, for example, by blending two or more types of thermoplastic polymers or by using a thermoplastic polymer having a core-shell structure, but there is no limitation on these methods. The core-shell structure is a polymer having a double structure in which the polymer belonging to the central portion and the polymer belonging to the outer shell portion have different compositions.

For a polymer blend or a core-shell structure, the glass transition temperature of the thermoplastic polymer as a whole can be controlled by combination of a polymer having a high glass transition temperature and a polymer having a low glass transition temperature. It is also possible to impart multiple functions to the thermoplastic polymer as a whole. In the case of a blend, for example, both stickiness and wettability with the polyolefin microporous membrane can be obtained with a blend of two or more different types of polymers having a glass transition temperature within a range of 20°C or higher, and a polymer having a glass transition temperature within a range of lower than 20°C. The blending ratio, in the case of a blend, is preferably within a range of 0.1:99.9 to 99.9:0.1, more preferably 5:95 to 95:5, still more preferably 50:50 to 95:5, and yet more preferably 60:40 to 90: 10, as the weight ratio of polymers having a glass transition temperature within a range of 20°C or higher and polymers having a glass transition temperature within a range of lower than 20°C. In the case of a core-shell structure, the adhesion and compatibility with other materials, such as polyolefin microporous membranes, can be adjusted by changing the outer shell polymer, and the polymer having improved adhesion to electrodes after hot pressing can be adjusted, for example, by adjusting the polymer belonging to the central part. The viscoelasticity can be controlled by combination of a polymer having high viscosity and a polymer having high elasticity.

The glass transition temperature of the shell of the thermoplastic polymer having a core-shell structure is not particularly limited, but is preferably lower than 20°C, more preferably 15°C or lower, and still more preferably from -30°C or higher and 15°C or lower. The glass transition temperature of the core of the thermoplastic polymer having a core-shell structure is not particularly limited, but is preferably 20°C or higher, more preferably 20°C or higher and 120°C or lower, and still more preferably 50°C or higher and 120°C or lower.

In the present embodiment, the glass transition temperature (Tg) of the thermoplastic polymer can be appropriately adjusted by changing the monomer components used for production of the thermoplastic polymer and the loading proportion of each monomer, for example. Specifically, the Tg for each monomer used for production of the thermoplastic polymer can be roughly estimated from the commonly used Tg for its homopolymer (as listed in the "Polymer Handbook" (for example, a Wiley-Interscience Publication), and the mixing proportion of the monomer. For example, a copolymer having high Tg can be obtained by blending a high proportion of a monomer such as styrene, methyl methacrylate or acrylonitrile, which yield polymers having Tg of about 100°C, and a copolymer having low Tg can be obtained by blending a high proportion of a monomer such as butadiene which yields a polymer having Tg of about -80°C, or n-butyl acrylate or 2-ethylhexyl acrylate which yield polymers having Tg of about -50°C.

The Tg of the polymer can be approximated by the Fox formula (formula (1) below). However, the glass transition point of the thermoplastic polymer of the present application is the value measured by the method using DSC mentioned above.

$$1/Tg = W_1/Tg_1 + W_2/Tg_2 + \cdots + W_i/Tg_i + \cdots W_n/Tg_n \qquad (1)$$

{In formula (1), Tg (K) represents the Tg of the copolymer, Tgi (K) represents the Tg of a homopolymer of each monomer i, and Wi represents the mass fraction of each monomer.}

(Structure of Thermoplastic Polymer-Containing Layer)

In the thermoplastic polymer-containing layer, preferably a thermoplastic resin having a glass transition temperature of 40°C to 110°C is present on the outer surface side of the separator for an electricity storage device, and a thermoplastic resin having a glass transition temperature of lower than 20°C is present on the interface side between the polyolefin microporous membrane and the thermoplastic polymer-containing layer. The "outer surface" is the side of the thermoplastic polymer-containing layer that contacts with an electrode when the separator for an electricity storage device and the electrode are stacked. The "interface" is the side of the thermoplastic polymer-containing layer that contacts with the polyolefin microporous membrane.

If a thermoplastic polymer having a glass transition temperature of 40°C to 110°C is present in the thermoplastic polymer-containing layer on the outer surface side of the separator for an electricity storage device, the adhesiveness with the microporous membrane will be excellent, and adhesiveness between the separator and electrodes will tend to be excellent as a result. If a thermoplastic polymer having a glass transition temperature of lower than 20°C is present on the interface side between the polyolefin microporous membrane and the thermoplastic polymer-containing layer, adhesion between the separator and electrodes and the handleability will both tend to be excellent. A separator having a thermoplastic polymer-containing layer as described above will tend to have further improved handleability and adhesion between the separator and electrodes.

Such a structure can be obtained as a structure in which the thermoplastic polymer (a) is composed of thermoplastic polymer particles and a binder polymer that binds the thermoplastic polymer particles to the polyolefin microporous membrane with the thermoplastic polymer particles exposed on the surface, the glass transition temperature of the thermoplastic polymer particles is within a range of 40°C or higher and 110°C or lower, and a thermoplastic polymer having a glass transition temperature of lower than 20°C is present on the interface side between the polyolefin microporous membrane and the thermoplastic polymer-containing layer, and/or the thermoplastic polymer (b) has a layered structure, the glass transition temperature of the thermoplastic polymer in the uppermost surface layer when used as a separator, is within a range of 40°C or higher and 110°C or lower, and a thermoplastic polymer having a glass transition temperature of lower than 20°C is present on the interface side between the polyolefin microporous membrane and the thermoplastic polymer-containing layer. The thermoplastic polymer (b) may also have a layered structure of polymers with different Tg values.

(Structure of Thermoplastic Polymer)

The structure of the thermoplastic polymer can be formed, for example, in a granulate form, since it contains a particulate polymer. The structure will tend to provide more excellent adhesion between the separator and electrodes and handleability for the separator. The term "particulate" as used herein means that in measurement with a scanning electron microscope (SEM), the individual thermoplastic polymers have borders with shapes such as thin elongated, spherical or polygonal shapes.

The average particle size of the particulate polymer is preferably 0.10 $\mu$m or more and 0.80 $\mu$m or less, and more preferably 0.20 $\mu$m or more and less than 0.70 $\mu$m, and can be more than 0.20 $\mu$m and 0.60 $\mu$m or less, from the viewpoints of being able to maintain the distance between the multiple electrodes via the separator while exhibiting adhesive force between the separator and the electrodes, and adjusting the ratio of the region where the particulate polymer is present and the region where the particulate polymer is stacked within the above numerical range. Herein, the average particle size of the thermoplastic polymer can be generally regarded as the average particle size ($D_{50}$) of the coating material containing the particulate polymer of the thermoplastic polymer.

From the viewpoints of maintaining the distance between a plurality of electrodes via the separator while exhibiting the adhesive force between the separator and the electrodes, and adjusting the ratio of the region where the particulate polymer is present and the region where the particulate polymer is stacked within the above numerical range, the particle size distribution of the particulate polymer is preferably such that the SD value shown in the following formula is 15% or less of the average particle size, more preferably 10% or less, and still more preferably 7% or less. In the calculation of the SD value, it is preferable to use the value of the largest peak.

$$SD = (D_{84} - D_{16})/2$$

The particle size distribution of the particulate polymer can be controlled, for example, by adjusting the polymerization conditions or classification using a filtration method.

(Degree of Swelling of Thermoplastic Polymer with Electrolyte Solution)

From the viewpoint of inhibiting a decrease in capacity and a decrease in energy density of the electricity storage device, it is preferable that the thermoplastic polymer has a property of swelling with the electrolyte solution. The degree of swelling of the thermoplastic polymer with the electrolyte solution is preferably by a factor of 2 or more and 15 or less, more preferably 3 or more and 10 or less, and still more preferably 4 or more and 8 or less. The degree of swelling of the thermoplastic polymer with the electrolyte solution can be measured by the method mentioned below for the Examples. The degree of swelling of the thermoplastic polymer of the embodiment with the electrolyte solution can be adjusted, for example, by changing the monomer components to be polymerized and the charging ratio of each monomer.

(Basis Weight of Thermoplastic Polymer-Containing Layer Per Side)

The basis weight of the thermoplastic polymer-containing layer formed on at least one side of the substrate surface of the separator is preferably $0.03\,g/m^2$ to $0.5\,g/m^2$, and more preferably $0.1\,g/m^2$ or more and $0.4\,g/m^2$ or less, from the viewpoints of the adhesive force and the formation of the dot-shaped pattern. The basis weight of the thermoplastic polymer-containing layer can be adjusted by changing the polymer concentration of the coating solution or the coating amount.

(Coverage of Substrate Surface with Thermoplastic Polymer-Containing Layer)

The total coverage area ratio of the thermoplastic polymer-containing layer to at least one side of the substrate surface is preferably 3% or more and 60% or less, more preferably 5% or more and 55% or less, and still more preferably 6% or more and 40% or less, from the viewpoints of inhibiting the resistance of the separator, and the injectability.
The total coverage area ratio can be 7% or more and 35% or less as long as the effects of the present invention are exhibited. The total coverage area ratio S of the thermoplastic polymer-containing layer present on the substrate surface is calculated from the following formula.

S (%) = total coverage area of thermoplastic polymer-containing layer/surface area of substrate $\times$ 100

The total coverage area ratio of the thermoplastic polymer-containing layer can be adjusted by changing the polymer concentration of the coating solution, the coating amount, the coating method, the coating conditions and the like.

[Substrate]

Since the separator must have an insulating property and ion permeability, the separator substrate will usually be formed of an insulating material sheet having a porous body structure, a polyolefin nonwoven fabric or a resin microporous membrane. A polyolefin microporous membrane having oxidation-reduction resistance and a dense, homogeneous porous structure is particularly preferred for a separator substrate to be used in an electricity storage device such as a non-aqueous secondary battery provided with a positive electrode and negative electrode that are able to occlusion/release lithium, and a non-aqueous electrolyte solution containing an electrolyte dissolved in a non-aqueous solvent.

(Polyolefin Microporous Membrane)

The polyolefin microporous membrane is not particularly limited and may be a microporous membrane composed of a polyolefin resin composition including a polyolefin, for example, and is preferably a porous membrane having a polyolefin resin as the main component. The polyolefin resin content in the polyolefin microporous membrane is not particularly limited, but from the viewpoint of shutdown performance when used as a separator for an electricity storage device, it is preferably a porous membrane including a polyolefin resin composition in which the polyolefin resin constitutes 50% to 100% as the weight fraction among the total components composing the porous membrane. The proportion constituted by the polyolefin resin is more preferably 60% or more and 100% or less, and still more preferably 70% or more and 100% or less.

The polyolefin resin is not particularly limited and may be a polyolefin resin commonly used in extrusion, ejection, inflation or blow molding, and homopolymers, copolymers and multistage polymers of ethylene, propylene, 1-butene, 4-methyl-1-pentene, 1-hexene and 1-octene may be used. Polyolefins selected from the group consisting of these homopolymers and copolymers or multistage polymers may be used alone, or they may be used in admixture.

Typical examples of polyolefin resins include, but are not limited to, polyethylenes such as low-density polyethylene, linear low-density polyethylene, medium-density polyethylene, high-density polyethylene and ultrahigh molecular weight polyethylene, or isotactic polypropylene and atactic polypropylene, ethylene-propylene random copolymer, polybutene, ethylene-propylene rubber and the like.

When the separator of the present embodiment is to be used as a battery separator, it is preferred to use a resin composed mainly of polyethylene and especially high-density polyethylene, for a low melting point and high strength.

From the viewpoint of improving the heat resistance of the porous membrane, it is more preferred to use a porous membrane composed of a resin composition containing polypropylene. The resin composition may contain polypropylene and a polyolefin resin other than polypropylene. The spatial structure of the polypropylene is not limited, and it may be isotactic polypropylene, syndiotactic polypropylene or atactic polypropylene.

There is no particular limitation on the proportion of polypropylene with respect to the total polyolefins in the polyolefin resin composition can be 0, but from the viewpoint of both heat resistance and a satisfactory shutdown function, it is preferably 35% by weight or less, more preferably 1 to 20% by weight, and still more preferably 3 to 10% by weight. In such cases, there are no limitations on a polyolefin resin other than polypropylene, and it may be a homopolymer or copolymer of an olefin hydrocarbon such as ethylene, 1-butene, 4-methyl-1-pentene, 1-hexene or 1-octene olefin, for example. Specific examples include polyethylene, polybutene and ethylene-propylene random copolymers.

From the viewpoint of the shutdown property, which represents the degree to which the pores become occluded by heat-fusion, the polyolefin resin other than polypropylene is preferably polyethylene, such as low-density polyethylene, linear low-density polyethylene. medium-density polyethylene, high-density polyethylene or ultrahigh molecular weight polyethylene. Polyethylene with a density of 0.93 g/cm$^3$ or more and 0.97 g/cm$^3$ or less as measured according to JIS K 7112 is preferred among these from the viewpoint of strength.

The viscosity-average molecular weight of the polyolefin resin composing the polyolefin microporous membrane is not particularly limited, but is preferably 30,000 or more and 12,000,000 or less, more preferably 50,000 or more and less than 2,000,000, still more preferably 100,000 or more and less than 1,200,000, and most preferably 500,000 or more and less than 1,000,000. If the viscosity-average molecular weight is 30,000 or more, the melt tension during melt molding will be increased, resulting in satisfactory moldability, while the strength will also tend to be high due to entanglement between the polymers. If the viscosity-average molecular weight is 12,000,000 or less, meanwhile, it will be easier to accomplish uniform melt kneading, and the sheet moldability, and especially thickness stability, will tend to be excellent. The viscosity-average molecular weight is also preferably less than 1,000,000 because the pores will be easily occluded during temperature increase, and a satisfactory shutdown function will tend to be obtained. For example, instead of using only a polyolefin with a viscosity-average molecular weight of less than 1,000,000, a mixture of a polyolefin with a viscosity-average molecular weight of 2,000,000 and a polyolefin having a viscosity-average molecular weight of 270,000 may be used, in such a proportion that the viscosity-average molecular weight of the mixture is less than 1,000,000.

The polyolefin microporous membrane may also include optional additives. Such additives are not particularly limited and examples include polymers other than polyolefins; inorganic particles; phenol-based, phosphorus-based and sulfur-based antioxidants; metal soaps such as calcium stearate and zinc stearate; ultraviolet absorbers; light stabilizers; antistatic agents; antifogging agents; and color pigments. The total content of additives is preferably 20 parts by weight or less, more preferably 10 parts by weight or less, and still more preferably 5 parts by weight or less, with respect to 100 parts by weight of the polyolefin resin composition.

(Physical Properties of Polyolefin Microporous Membrane)

The puncture strength in terms of the basis weight (g/m$^2$) of the polyolefin microporous membrane (hereinafter sometimes abbreviated to PO microporous membrane) (hereinafter referred to as "basis weight-equivalent puncture strength") is preferably 50 gf/(g/m$^2$) or more. A PO microporous membrane having a basis weight-equivalent puncture strength of 50 gf/(g/m$^2$) or more will be less likely to result in tearing of the PO microporous membrane during impact testing of the electricity storage device. From the viewpoint of improving the electricity storage device safety, such as impact resistance, while maintaining the strength of the PO microporous membrane, the basis weight-equivalent puncture strength is more preferably 60 gf/(g/m$^2$) or more, still more preferably 70 gf/(g/m$^2$) or more, and particularly preferably 80 gf/(g/m$^2$) or more. The limit for the basis weight-equivalent puncture strength is not particularly limited and may be, for example, 200 gf/(g/m$^2$) or less, 150 gf/(g/m$^2$) or less, or 140 gf/(g/m$^2$) or less.

The puncture strength that is not in terms of the basis weight of the PO microporous membrane (hereinafter referred to simply as "puncture strength") has a lower limit of preferably 100 gf or more (preferably 0.98 N or more), more preferably 200 gf or more, and still more preferably 300 gf or more. A puncture strength of 100 gf or more is preferred from the viewpoint of inhibiting tearing of the PO microporous membrane during impact testing. The upper limit for the puncture strength of the PO microporous membrane is preferably 1,000 gf or less, more preferably 800 gf or less and still more preferably 700 gf or less from the viewpoint of stability during film formation. The lower limit may be a value that allows stable production during film formation and battery fabrication. The upper limit is set in balance with the other properties. The puncture strength can be increased by increasing the orientation of the molecular chains by application of shearing force or stretching of the molded article during extrusion, but since increasing the strength also impairs the thermostability due to higher residual stress, this is controlled as suitable for the purpose.

The porosity of the polyolefin microporous membrane in the present embodiment is not particularly limited, but is preferably 20% or more, more preferably 35% or more, and still more preferably 40% or more, and is preferably 80% or less, more preferably 60% or less, and still more preferably 55% or less. The porosity is preferably 20% or more from the viewpoint of ensuring the permeability of the separator. The porosity is also preferably 80% or less from the viewpoint of ensuring puncture strength. The porosity can be adjusted, for example, by changing the stretch ratio.

The thickness of the polyolefin microporous membrane is not particularly limited, but is preferably 2 $\mu$m or more, more preferably 4 $\mu$m or more, and still more preferably 5 $\mu$m or more, and the upper limit is preferably 30 $\mu$m or less, more preferably 20 $\mu$m or less, still more preferably 16 $\mu$m or less, and most preferably 12 $\mu$m or less. The thickness of the polyolefin microporous membrane is preferably 2 $\mu$m or more, from the viewpoint of increasing the mechanical strength. The thickness is also preferably 30 $\mu$m or less because this will reduce the volume occupied by the separator, which is advantageous for increasing the capacity of the battery.

The air permeability of the polyolefin microporous membrane is preferably 10 sec/100 cm$^3$ or more, more preferably 20 sec/100 cm$^3$ or more, still more preferably 30 sec/100 cm$^3$, and most preferably 40 sec/100 cm$^3$ or more, and is preferably 300 sec/100 cm$^3$ or less, more preferably 200 sec/100 cm$^3$ or less, still more preferably 180 sec/100 cm$^3$, and particularly preferably 140 sec/100 cm$^3$. The air permeability is preferably 10 sec/100 cm$^3$ or more from the viewpoint of reducing self-discharge of the electricity storage device. The air permeability is also preferably 300 sec/100 cm$^3$ or less from the viewpoint of obtaining a satisfactory charge-discharge characteristics. The air permeability can be adjusted by changing the stretching temperature or stretch ratio.

The average pore size of the polyolefin microporous membrane in the present embodiment is preferably 0.15 $\mu$m or less and more preferably 0.1 $\mu$m or less, with a lower limit of preferably 0.01 $\mu$m or more. A average pore size of 0.15 $\mu$m or less is preferred from the viewpoint of reducing self-discharge of the electricity storage device and helping to prevent reduction in capacity, for use as a separator for an electricity storage device. The average pore size can be adjusted by changing the stretch ratio when producing the polyolefin microporous membrane.

The short-circuit temperature, as an indicator of the heat resistance of the polyolefin microporous membrane of the embodiment, is preferably 140°C or higher, more preferably 150°C or higher and still more preferably 160°C or higher. A short-circuit temperature of 140°C or higher is preferred from the viewpoint of safety of the electricity storage device, when used as a separator for an electricity storage device.

The viscosity-average molecular weight of the polyolefin microporous membrane in the present embodiment is not particularly limited, but is preferably 100,000 or more and 5,000,000 or less, more preferably 300,000 or more and 1,500,000 or less, and still more preferably 500,000 or more and 1,000,000 or less. The viscosity-average molecular weight of 100,000 or more and 5,000,000 or less is preferred from the viewpoint of the puncture strength, permeability, heat shrinkage and shutdown function of the polyolefin microporous membrane.

(Method for Producing Polyolefin Microporous Membrane)

The method for producing a polyolefin microporous membrane is not particularly limited, and any publicly known method may be employed. Examples include a method of melt kneading a polyolefin resin composition and a plasticizer and molding the mixture into a sheet, optionally with stretching, and then extracting the plasticizer to form pores; a method of melt kneading a polyolefin resin composition, extruding it at a high draw ratio, and then stretching it with heat treatment to detach the polyolefin crystal interface and form pores; a method of melt kneading a polyolefin resin composition and an inorganic filler and casting the mixture into a sheet, and then detaching the interface between the polyolefin and the inorganic filler by stretching to form pores; and a method of first dissolving the polyolefin resin composition and then dipping it in a poor solvent for the polyolefin to solidify the polyolefin while simultaneously removing the solvent, to form pores. As an example of a method for producing a porous membrane, a method in which a polyolefin resin composition and a plasticizer are melt-kneaded and formed into a sheet, and then the plasticizer is extracted will be described below.

First, the polyolefin resin composition and the plasticizer are melt-kneaded. In the melt kneading method, a polyolefin resin and other additives as necessary may be loaded into a resin kneader such as an extruder, kneader, Laboplastomil, kneading roll or Banbury mixer, and the plasticizer introduced at a desired proportion and kneaded in while hot melting the resin components. Before loading the polyolefin resin, the other additives and the plasticizer into the resin kneader, they are preferably pre-kneaded in a prescribed proportion using a Henschel mixer or the like. More preferably, only a portion of the plasticizer is loaded in during the prekneading, while the remainder of the plasticizer is kneaded in while side feeding it to the resin kneader. This can increase the dispersibility of the plasticizer, and allow stretching to a high factor without membrane rupture during stretching of the melt-kneaded cast sheet of the resin composition and plasticizer in the subsequent steps.

The plasticizer used may be a non-volatile solvent that can form a homogeneous solution at or above the melting point of the polyolefin. Examples of such non-volatile solvents include hydrocarbons such as liquid paraffin and paraffin wax; esters such as dioctyl phthalate and dibutyl phthalate; and higher alcohols such as oleyl alcohol and stearyl alcohol, with liquid paraffin being preferable among these. Liquid paraffins are preferred among these because of their high compatibility with polyethylene or polypropylene and low risk of interfacial peeling between the resin and plasticizer even when the melt kneaded mixture is stretched, thus tending to facilitate uniform stretching.

The proportion of the polyolefin resin composition and the plasticizer is not particularly limited, as long as it is in a range in which they can undergo uniform melt kneading to then be cast into a sheet form. For example, the weight fraction of the plasticizer in the composition including the polyolefin resin composition and the plasticizer is preferably 30 to 80% by weight and more preferably 40 to 70% by weight. A plasticizer weight fraction of 80% by weight or less will help prevent insufficient melt tension during melt molding, and will tend to improve moldability. A weight fraction of the plasticizer of 30% by weight or more, meanwhile, will avoid cutting of the polyolefin chains even with stretching of the mixture of the polyolefin resin composition and plasticizer to a high factor, and will aid in formation of a homogeneous and fine pore structure while also increasing strength.

The melt-kneaded mixture is then cast into a sheet. The method of producing the cast sheet may be, for example, a method of extruding the melt kneaded mixture through a T-die or the like into a sheet, and contacting it with a heat conductor to cool it to a sufficiently lower temperature than the crystallization temperature of the resin component, thereby solidifying it. The heat conductor used for the cooling solidification may be metal, water, air or the plasticizer itself, but a metal roll is preferred because it has high heat conduction efficiency. When the mixture is to be contacted with metal rolls, it is more preferably sandwiched between the rolls because this will further increase the heat conduction efficiency while causing the sheet to become oriented and increasing the membrane strength, while the surface smoothness of the sheet will also be improved. The die lip gap when extruding into a sheet from a T-die is preferably 400 $\mu$m or more and 3,000 $\mu$m or less, and more preferably 500 $\mu$m or more and 2,500 $\mu$m or less. Limiting the die lip gap to 400 $\mu$m or more can reduce tip adhesion, can lower the effects of streaks or defects on the film quality, and can help avoid membrane rupture during the subsequent stretching step. Limiting the die lip gap to 3,000 $\mu$m or less, meanwhile, will tend to speed the cooling rate to prevent cooling irregularities while maintaining sheet thickness stability.

The cast sheet obtained in this manner is then preferably stretched. Either uniaxial stretching or biaxial stretching can be suitably used for the stretching treatment, but biaxial stretching is preferred from the viewpoint of improving the strength of the obtained porous membrane. When a cast sheet is subjected to high-ratio stretching in the biaxial directions the molecules become oriented in the in-plane direction, such that the porous membrane that is obtained as the final result is less likely to tear, and has high puncture strength. The stretching method may be simultaneous biaxial stretching, sequential biaxial stretching, multistage stretching or multiple stretching, for example, with simultaneous biaxial stretching being preferred from the viewpoint of improved puncture strength, uniform stretching, and shutdown properties.

Simultaneous biaxial stretching is a stretching method in which stretching in the MD and stretching in the TD are carried out simultaneously, and the draw ratios in each direction may be different. Sequential biaxial stretching is a stretching method in which stretching in the MD and TD are carried out independently, in such a manner that while the MD or TD stretching is being carried out, the other direction is in a non-constrained state or in an anchored state with fixed length.

The stretch ratio is an area increase by a factor of preferably within a range of 20 or more and 100 or less, and more preferably within a range of 25 or more and 50 or less. The stretch ratio in each axial direction is preferably within a range of 4 or more and 10 or less in the MD and 4 or more and 10 or less, inclusive, in the TD, and more preferably within a range of 5 or more and 8 or less in the MD and 5 or more and 8 or less in the TD. If the total area factor is 20 or more the obtained porous membrane will tend to be imparted with sufficient strength, and if the total area factor is 100 or less, membrane rupture will tend to be prevented in the stretching step, resulting in high productivity.

The cast sheet may also be subjected to rolling. Rolling may be carried out, for example, by a press method using a double belt press machine or the like. Rolling can increase the orientation of the surface layer sections, in particular. The area increase by rolling is preferably by a factor of more than 1 and 3 or less, and more preferably a factor of more than 1 and 2 or less. If the rolling factor is more than 1, the plane orientation will increase and the membrane strength of the final porous membrane will tend to increase. The rolling factor is preferably 3 or less because there will be less of a difference in orientation between the surface layer portion and center interior portion, tending to allow formation of a porous structure that is more uniform in the thickness direction of the membrane.

The plasticizer is then removed from the cast sheet to obtain a porous membrane. The method of removing the plasticizer may be, for example, a method of immersing the cast sheet in an extraction solvent to extract the plasticizer, and then thoroughly drying it. The method of extracting the plasticizer may be either a batch process or a continuous process. In order to minimize shrinkage of the porous membrane, it is preferred to constrain the edges of the cast sheet during the series of steps of immersion and drying. The plasticizer residue in the porous membrane is preferably less than 1% by weight.

The extraction solvent used is preferably one that is a poor solvent for the polyolefin resin and a good solvent for the plasticizer, and that has a boiling point that is lower than the melting point of the polyolefin resin. Examples of such extraction solvents include hydrocarbons such as n-hexane and cyclohexane; halogenated hydrocarbons such as methylene chloride and 1,1,1-trichloroethane; non-chlorine-based halogenated solvents such as hydrofluoroethers and hydrofluorocarbons; alcohols such as ethanol and isopropanol: ethers such as diethyl ether and tetrahydrofuran; and ketones such as acetone and methyl ethyl ketone. These extraction solvents may be collected by a process such as distillation and then reutilized.

In order to help prevent shrinkage of the porous membrane, heat treatment for heat setting or thermal relaxation may be carried out either after the stretching step or after formation of the porous membrane. The microporous membrane may also be subjected to post-treatment such as hydrophilizing treatment with a surfactant, or crosslinking treatment with ionizing radiation.

[Porous Layer]

If desired, the separator for the electricity storage device may include a porous layer containing an inorganic filler and a resin binder. The location of the porous layer may be at least part of the surface of a substrate such as a microporous polyolefin membrane, and/or between the substrate and a thermoplastic polymer-containing layer. The porous layer may be present on one or both sides of the substrate.

(Inorganic Filler)

The inorganic filler used in the inorganic filler-containing layer is not particularly limited, but preferably it has a melting point of 200°C or higher and also high electrical insulating properties, and is also electrochemically stable in the range in which the lithium ion secondary battery is to be used.

Examples of materials for the inorganic filler include oxide-based ceramics such as alumina, silica, titania, zirconia, magnesia, ceria, yttria, zinc oxide and iron oxide; nitride-based ceramics such as silicon nitride, titanium nitride and boron nitride; ceramics such as silicon carbide, calcium carbonate, magnesium sulfate, aluminum sulfate, barium sulfate, aluminum hydroxide, aluminum oxide hydroxide or boehmite, potassium titanate, talc, kaolinite, dickite, nacrite, halloysite, pyrophyllite, montmorillonite, sericite, mica, amesite, bentonite, asbestos, zeolite, calcium silicate, magnesium silicate, diatomaceous earth and quartz sand; and glass fibers. Of these, one or more selected from the group consisting of alumina, boehmite and barium sulfate are preferred from the viewpoint of stability in the lithium ion secondary battery. Synthetic boehmite is more preferred as boehmite since it can reduce ionic impurities that may adversely affect the properties of electrochemical elements.

Examples of inorganic filler forms include laminar, scaly, polyhedral, needle-like, columnar, granular, spherical, fusiform and block-shaped forms, and various combinations of inorganic fillers with these forms may also be used. Preferred among these are block-shaped forms from the viewpoint of balance between permeability and heat resistance.

The aspect ratio of the inorganic filler is preferably 1.0 or more and 5.0 or less, and more preferably 1.1 or more and 3.0 or less. The aspect ratio is preferably 5.0 or less from the viewpoint of inhibiting moisture adsorption on the multilayer porous membrane and preventing capacity deterioration with repeated cycling, and also from the viewpoint of inhibiting deformation at temperatures above the melting point of the polyolefin microporous membrane.

The specific surface area of the inorganic filler is preferably 3.0 $m^2$/g or more and 17 $m^2$/g or less, more preferably 5.0 $m^2$/g or more and 15 $m^2$/g or less, and still more preferably 6.5 $m^2$/g or more and 13 $m^2$/g or less. The specific surface area is preferably 17 $m^2$/g or less from the viewpoint of inhibiting moisture adsorption on the multilayer porous membrane and preventing capacity deterioration with repeated cycling, and the specific surface area is preferably 3.0 $m^2$/g or more from the viewpoint of inhibiting deformation at temperatures above the melting point of the polyolefin microporous membrane. The specific surface area of the inorganic filler is measured using the BET adsorption method.

In the particle size distribution of a slurry containing the inorganic filler, the average particle size $D_{50}$ of the inorganic particles is preferably 0.10 $\mu$m or more and 1.40 $\mu$m or less, more preferably 0.20 $\mu$m or more and 0.80 $\mu$m or less, and still more preferably 0.25 $\mu$m or more and 0.50 $\mu$m or less. The $D_{50}$ is preferably 0.10 $\mu$m or more from the viewpoint of inhibiting the amount of moisture adsorption by the multilayer porous membrane, thus preventing capacity deterioration with repeated cycling, and the $D_{50}$ is preferably 1.40 $\mu$m or less from the viewpoint of inhibiting deformation at temperatures above the melting point of the porous membrane.

In the particle size distribution of a slurry containing the inorganic filler, $D_{10}$ of inorganic particles is preferably 0.08 $\mu$m or more and 0.80 $\mu$m or less, more preferably 0.09 $\mu$m or more and 0.50 $\mu$m or less, and still more preferably 0.10 $\mu$m or more and 0.35 $\mu$m or less. The $D_{10}$ is preferably 0.08 $\mu$m or more from the viewpoint of inhibiting moisture adsorption on the multilayer porous membrane and preventing capacity deterioration with repeated cycling, and the $D_{10}$ is preferably 0.80 $\mu$m or less from the viewpoint of inhibiting deformation at temperatures above the melting point of the polyolefin microporous membrane.

The method of adjusting the particle size distribution of the inorganic filler as described above may be, for example, a method of pulverizing the inorganic filler using a ball mill, bead mill or jet mill to obtain the desired particle size distribution, or a method of preparing multiple fillers with different particle size distributions and then blending them.

The proportion of the inorganic filler in the porous layer may be set as appropriate from the viewpoint of the bondability, and the permeability and heat resistance of the multilayer porous membrane, but it is preferably 50% by weight or more and less than 100% by weight, more preferably 70% by weight or more and 99.99% by weight or less, still more preferably 80% by weight or more and 99.9% by weight or less, and particularly preferably 90% by weight or more and 99% by weight or less.

(Resin Binder)

The type of resin binder is not particularly limited, but it is preferred to use one that is insoluble in the electrolyte solution of the lithium ion secondary battery and electrochemically stable in the operating range of the lithium ion secondary battery, when using as a separator for a lithium ion secondary battery including the multilayer porous membrane in the present embodiment.

Specific examples of resin binders include the following 1) to 7).

1) Polyolefins: Polyethylene, polypropylene, ethylene-propylene rubber and modified forms of these;
2) Conjugated diene-based polymers: for example, styrene-butadiene copolymers and their hydrogenated forms, acrylonitrile-butadiene copolymers and their hydrogenated forms and acrylonitrile-butadiene-styrene copolymers and their hydrogenated forms;
3) Acrylic polymers: for example, methacrylic acid ester-acrylic acid ester copolymers, styrene-acrylic acid ester copolymers and acrylonitrile-acrylic acid ester copolymers;
4) Polyvinyl alcohol-based resins: for example, polyvinyl alcohol and polyvinyl acetate;
5) Fluorine-containing resins: for example, polyvinylidene fluoride, polytetrafluoroethylene, vinylidene fluoride-hexafluoropropylene-tetrafluoroethylene copolymer and ethylene-tetrafluoroethylene copolymer;
6) Cellulose derivatives: for example, ethyl cellulose, methyl cellulose, hydroxyethyl cellulose and carboxymethyl cellulose; and
7) Polymers that are resins with a melting point and/or glass transition temperature of 180°C or higher, or without a melting point but having a decomposition temperature of 200°C or higher; for example, polyphenylene ethers, polysulfones, polyethersulfones, polyphenylene sulfides, polyetherimides, polyamideimides, polyamides and polyesters.

Preferred from the viewpoint of further improving the safety during short circuits are 3) acrylic polymers, 5) fluorine-containing resins and 7) polyamide polymers. Polyamides are preferably total aromatic polyamides, and especially polymetaphenylene isophthalamide, from the viewpoint of durability.

From the viewpoint of compatibility between the resin binder and the electrodes, the above 2) conjugated diene-based polymers are preferred, while from the viewpoint of voltage endurance, the above 3) acrylic polymers, and 5) fluorine-containing resins are preferred.

The above 2) conjugated diene-based polymer is a polymer that includes a conjugated diene compound as a monomer unit.

Examples of conjugated diene compounds include 1,3-butadiene, 2-methyl-1,3-butadiene, 2,3-dimethyl-1,3-butadiene, 2-chlor-1,3-butadiene, substituted straight-chain conjugated pentadienes and substituted or side chain-conjugated hexadienes, any of which may be used alone or in combinations of two or more thereof. A particularly preferred compound is 1,3-butadiene.

The above 3) acrylic polymer is a polymer that includes a (meth)acrylic compound as a monomer unit. A (meth)acrylic compound is at least one compound selected from the group consisting of (meth)acrylic acid and (meth)acrylic acid esters.

Examples of (meth)acrylic acid esters to be used as the 3) acrylic polymer include (meth)acrylic acid alkyl esters such as methyl acrylate, methyl methacrylate, ethyl acrylate, ethyl methacrylate, butyl acrylate, butyl methacrylate, 2-ethylhexyl acrylate and 2-ethylhexyl methacrylate; and epoxy group-containing (meth)acrylic acid esters such as glycidyl acrylate and glycidyl methacrylate; any of which may be used alone or in combinations of two or more thereof. Particularly preferred among these are 2-ethylhexyl acrylate (EHA) and butyl acrylate (BA).

An acrylic polymer is preferably a polymer including EHA or BA as a main structural unit, from the viewpoint of safety in impact testing. A "main structural unit" is a portion of the polymer corresponding to a monomer constituting at least 40 mol % of the entire starting material used to form the polymer.

The above 2) conjugated diene-based polymer and 3) acrylic polymer may also be obtained by copolymerization with other monomers that are copolymerizable with them. Examples of other copolymerizable monomers to be used include unsaturated carboxylic acid alkyl esters, aromatic vinyl-based monomers, vinyl cyanide-based monomers, unsaturated monomers with hydroxyalkyl groups, unsaturated amide carboxylate monomers, crotonic acid, maleic acid, maleic acid anhydride, fumaric acid and itaconic acid, any of which may be used alone or in combinations of two or more thereof. Unsaturated carboxylic acid alkyl ester monomers are particularly preferred among these. Unsaturated carboxylic acid alkyl ester monomers include dimethyl fumarate, diethyl fumarate, dimethyl maleate, diethyl maleate, dimethyl itaconate, monomethyl fumarate and monoethyl fumarate, any of which may be used alone or in combinations of two or more thereof.

The 2) conjugated diene-based polymer can be obtained by copolymerization of the aforementioned (meth) acrylic compound as another monomer.

From the viewpoint of exhibiting high bonding force between inorganic particles even at high temperatures above ordinary temperature, and inhibiting heat shrinkage, the resin binder is preferably in the form of a latex, and is more preferably an acrylic polymer latex.

The average particle size of the resin binder is preferably 50 nm or more and 500 nm or less, more preferably 60 nm or more and 460 nm or less, and still more preferably 80 nm or more and 250 nm or less. If the average particle size of the resin binder is 50 nm or more, the ion permeability will be less likely to decrease and a high output characteristics will be more readily exhibited, when the porous layer containing the inorganic filler and binder has been layered on at least one side of the polyolefin porous membrane. Even with rapid temperature increase that occurs during abnormal heat release, a smooth shutdown property is exhibited and a high degree of safety can be obtained more easily. A average particle size of 500 nm or less for the resin binder will tend to result in satisfactory bondability, satisfactory heat shrinkage as a multilayer porous membrane, and excellent safety.

The average particle size of the resin binder can be controlled by adjusting the polymerization time, the polymerization temperature, the compositional ratio of the components, the loading order of the components, and the pH.

A dispersing agent such as a surfactant may also be added to the coating solution to improve the dispersion stability and coatability. The dispersing agent is adsorbed onto the surfaces of the inorganic particles in the slurry, thus stabilizing the inorganic particles by electrostatic repulsion or other forces, and examples thereof include polycarboxylic acid salts, sulfonic acid salts and polyoxyethers. The amount of dispersing agent added is preferably 0.2 part by weight or more and 5.0 parts by weight or less, and more preferably 0.3 part by weight or more and 1.0 parts by weight or less, based on solid content, with respect to 100 parts by weight of the inorganic filler.

(Physical Properties, Structure and Forming Method for Porous Layer)

From the viewpoint of inhibiting the penetration of the thermoplastic polymer-containing coating solution into the porous layer or migration of the thermoplastic polymer into the porous layer to inhibit the a coffee ring phenomenon, the pore size of the porous layer is preferably 0.03 $\mu$m or more and 0.40 $\mu$m or less, more preferably 0.05 $\mu$m or more and 0.25 $\mu$m or less, and still more preferably 0.08 $\mu$m or more and 0.20 $\mu$m or less.

The thickness of the porous layer is preferably 0.5 $\mu$m or more and 5.0 $\mu$m or less, more preferably 0.7 $\mu$m or more and 4.0 $\mu$m or less, still more preferably 1.0 $\mu$m or more and 3.0 $\mu$m or less, and particularly preferably 1.5 $\mu$m or more and 2.0 $\mu$m or less. The thickness of the porous layer is preferably 0.5 $\mu$m or more from the viewpoint of inhibiting deformation at temperatures above the melting point of the porous membrane. The thickness of the porous layer is preferably 5.0 $\mu$m or less from the viewpoint of improving the battery capacity or inhibiting the amount of moisture adsorption by the multilayer porous film.

The layer density in the porous layer is preferably 1.10 g/(m$^2 \cdot \mu$m) or more and 3.00 g/(m$^2 \cdot \mu$m) or less, more preferably 1.20 g/(m$^2 \cdot \mu$m) or more and 2.90 g/(m$^2 \cdot \mu$m) or less, still more preferably 1.40 g/(m$^2 \cdot \mu$m) or more and 2.70 g/(m$^2 \cdot \mu$m) or less, and particularly preferably 1.50 g/(m$^2 \cdot \mu$m) or more and 2.50 g/(m$^2 \cdot \mu$m) or less. The layer density in the porous layer is preferably 1.10 g/(m$^2 \cdot \mu$m) or more from the viewpoint of inhibiting deformation at temperatures above the melting point of the PO microporous membrane. The layer density in the porous layer is preferably 3.00 g/(m$^2 \cdot \mu$m) or less from the viewpoint of preventing capacity deterioration with repeated cycling, while maintaining the ion permeability of the porous layer.

The method of forming the porous layer may be, for example, a method in which a coating solution containing an inorganic filler and a resin binder is applied onto at least one side of a porous membrane composed mainly of a polyolefin resin to form a porous layer.

The solvent for the coating solution containing an inorganic filler and a resin binder is preferably one that can uniformly and stably disperse the inorganic filler and resin binder, and examples include N-methylpyrrolidone, N,N-dimethylformamide, N,N-dimethyl acetamide, water, ethanol, toluene, hot xylene, methylene chloride, hexane and the like.

In order to improve the dispersion stability or coatability, the coating may also contain various additives including dispersing agents such as surfactants; thickeners; moistening agents; antifoaming agents; and pH adjustors that contain acids or alkalis. These additives are preferably ones that can be removed during solvent removal, but they may also remain in the porous layer, as long as they are electrochemically stable in the range in which the lithium ion secondary battery is used, do not interfere with the battery reaction, and are stable up to about 200°C.

The method of dispersing the inorganic filler and resin binder in the solvent of the coating solution is not particularly limited, as long as it allows the coating solution to exhibit the necessary dispersion properties for the coating step. Examples include mechanical stirring using a ball mill, bead mill, planetary ball mill, vibrating ball mill, sand mill, colloid mill, attritor, roll mill, high-speed impeller disperser, disperser, homogenizer, high-speed impact mill, ultrasonic disperser or stirring blade.

The method of applying the coating solution onto the microporous membrane is not particularly limited, as long as the necessary layer thickness or coating area can be ensured, and examples include gravure coater methods, small-diameter gravure coater methods, reverse roll coater methods, transfer roll coater methods, kiss coater methods, dip coater methods, knife coater methods, air doctor coater methods, blade coater methods, rod coater methods, squeeze coater methods, cast coater methods, die coater methods, screen printing methods, spray coating methods and the like.

The surface of the microporous membrane serving as the separator substrate is preferably surface-treated prior to application of the coating solution, because the coating solution will be easier to apply and adhesion between the inorganic filler-containing porous layer and the microporous membrane surface after coating will be increased. The method of surface treatment is not particularly limited, as long as it does not significantly impair the porous structure of the microporous membrane, and examples include corona discharge treatment, mechanical roughening methods, solvent treatment, acid treatment, ultraviolet oxidation methods and the like.

The method of removing the solvent from the coated film after application of the coating solution containing an inorganic filler and a resin binder onto the porous membrane is also not particularly limited, as long as it does not adversely affect the microporous membrane, and examples include methods of anchoring the microporous membrane while drying it at a temperature below its melting point, and methods of reduced pressure drying at low temperature. The drying temperature and take-up tension are preferably adjusted as appropriate from the viewpoint of controlling shrinkage stress in the MD of the porous membrane and multilayer porous membrane.

[Physical Properties and Construction of Separator]

From the viewpoints of further inhibiting an increase in resistance or an increase in membrane thickness of the separator, increasing the injectability, and improving the performance of the electricity storage device, the ratio of the thickness of the thermoplastic polymer-containing layer to the thickness of the substrate, or the ratio of the thickness of the thermoplastic polymer-containing layer to the thicknesses of the substrate and the porous layer is preferably 0.05 or more and 0.40 or less, more preferably 0.10 or more and 0.40 or less, and still more preferably 0.10 or more and 0.30 or less.

From the viewpoint of excellent injectability of the electrolyte solution, resistance to pooling of air and a shorter injection time, the contact angle of the separator according to the present embodiment with the electrolyte solution is preferably 0° or more and 20° or less, more preferably 2° or more and 18° or less, and still more preferably 4° or more and 16° or less. The contact angle with the electrolyte solution is preferably measured on the side of the separator on which the thermoplastic polymer-containing layer has been formed in a dot-shaped pattern.

The lower limit of the thickness of the separator for an electricity storage device is preferably 5 $\mu$m or more and more preferably 6 $\mu$m or more, and the upper limit is preferably 25 $\mu$m or less, more preferably 18 $\mu$m or less, still more preferably 14 $\mu$m or less, and most preferably 13 $\mu$m or less. The membrane thickness of the separator is preferably 5 $\mu$m or more from the viewpoint of ensuring the strength of the separator. Meanwhile, it is preferable for the membrane thickness of the separator to be 25 $\mu$m or less from the viewpoint of obtaining satisfactory charge/discharge characteristics.

The lower limit for the air permeability of the separator for an electricity storage device is preferably 10 sec/100 cm$^3$ or more, more preferably 20 sec/100 cm$^3$ or more, still more preferably 30 sec/100 cm$^3$, and most preferably 40 sec/100 cm$^3$, and the upper limit is preferably 500 sec/100 cm$^3$ or less, more preferably 300 sec/100 cm$^3$ or less, and still more preferably 200 sec/100 cm$^3$ or less. The air permeability of the separator is preferably 10 sec/100 cm$^3$ or more from the viewpoint of further inhibiting self-discharge of the electricity storage device when a separator for an electricity storage device is fabricated. Meanwhile, the air permeability of the separator is also preferably 500 sec/100 cm$^3$ or less from the viewpoint of obtaining satisfactory charge-discharge characteristics. The air permeability of the separator for an electricity storage device can be adjusted by changing the stretching temperature or stretch ratio during production of the polyolefin microporous membrane, or the coverage area ratio of the thermoplastic polymer, or the form in which it is provided.

The shutdown temperature of the separator for an electricity storage device, as an indicator of the safety of the electricity storage device, is preferably 160°C or lower, more preferably 155°C or lower, and still more preferably 150°C or lower. Moreover, by controlling the composition and structure of the substrate, the shutdown temperature can be set at 145°C or lower.

The short-circuit temperature of the separator for an electricity storage device, as an indicator of heat resistance, is preferably 140°C or higher, more preferably 150°C or higher, and still more preferably 160°C or higher. A short-circuit temperature of 140°C or higher is preferred from the viewpoint of safety of the electricity storage device, when used as a separator for an electricity storage device.

The lower limit of the basis weight of the separator for an electricity storage device is preferably 3.5 $g/m^2$ or more, and more preferably 4.5 $g/m^2$ or more, and the upper limit is preferably 18 $g/m^2$ or less, more preferably 14 $g/m^2$ or less, still more preferably 12 $g/m^2$ or less, and most preferably 11 $g/m^2$ or less. The basis weight of the separator is preferably 3.5 $g/m^2$ or more from the viewpoint of ensuring the strength of the separator for an electricity storage device. Meanwhile, the separator weight per unit area is preferably 18 $g/m^2$ or less from the viewpoint of obtaining satisfactory charge/discharge characteristics.

The lower limit of the puncture strength of the separator for an electricity storage device is preferably 200 gf or more, more preferably 300 gf or more, still more preferably 400 gf or more, and most preferably 500 gf or more. When the separator is used for an electricity storage device, the puncture strength is preferably 200 gf or more, from the viewpoint of the safety of the electricity storage device. There is no limitation on the upper limit of the puncture strength, but it may be 800 gf or less from the viewpoint of inhibiting shrinkage at high temperature.

The upper limit of the heat shrinkage ratio at 150°C of the separator for an electricity storage device is preferably 10% or less, more preferably 5% or less, still more preferably 3% or less, and most preferably 2% or less. The lower limit may be 0% when the presence of a porous layer can inhibit deformation of the polyolefin microporous membrane due to heating. When a separator for an electricity storage device is fabricated, the heat shrinkage ratio at 150°C is preferably 10% or less from the viewpoint of the safety of the electricity storage device.

From the viewpoint of efficiently exerting the effects of the present invention, the separator preferably has a multilayer structure in which a thermoplastic polymer-containing layer is provided on both sides of a substrate, and more preferably has a porous layer containing an inorganic filler and a resin binder formed between at least one side of the substrate and the thermoplastic polymer-containing layer.

[Method for Producing Separator]

The method for producing a separator is not particularly limited, and examples thereof include a method in which a coating solution containing a thermoplastic polymer is applied onto on at least one surface of the substrate such as a polyolefin microporous membrane.

In another aspect of the present invention, there is provided a method for producing a separator for an electricity storage device, comprising the steps of:

preparing a substrate, and
applying a coating solution containing a thermoplastic polymer onto at least one side of the substrate surface to form a thermoplastic polymer-containing layer, wherein
the coating solution has a solid content of 6% by weight or more and 35% by weight or less, preferably 10% by weight or more and 30% by weight or less, based on the total weight of the coating solution, a viscosity of 10 mPa·s or more and 100 mPa·s or less, and preferably 25 mPa·s or more and 80 mPa·s or less, a surface tension of 10 mN/m or more and 45 mN/m or less, preferably 20 mN/m or more and 40 mN/m or less, and more preferably 25 mN/m or more and 35 mN/m or less, and a pH of 6 or more and 10 or less, and preferably 7 or more and 9 or less.

The substrate described above may be prepared, and the microporous polyolefin membrane described above is preferably used as the substrate. From the viewpoints of controlling the ratio of the region where the particulate polymer is present and the region where the particulate polymer is stacked in the cross section passing through the center of the dot-shaped pattern of the thermoplastic polymer-containing layer described above, and controlling the penetration of the thermoplastic polymer-containing coating solution into the substrate, a substrate having an average pore size of 0.15 $\mu$m or less is preferably prepared.

The method of applying the coating solution containing the thermoplastic polymer onto the porous membrane is not particularly limited, as long as it can provide the necessary layer thickness and coating area. Examples include gravure coater methods, small-diameter gravure coater methods, reverse roll coater methods, transfer roll coater methods, kiss coater methods, dip coater methods, knife coater methods, air doctor coater methods, blade coater methods, rod coater methods, squeeze coater methods, cast coater methods, die coater methods, screen printing methods, spray coating methods, spray coater methods and ink-jet coating methods. Preferred among these are gravure coater methods or spray coating methods, from the viewpoint of a high degree of freedom for the coating shape of the thermoplastic polymer, to easily obtain the preferred area ratio. From the viewpoint of adjusting the dot-shaped pattern of the thermoplastic polymer-containing layer as described above, preferred methods are gravure coating, ink-jet application and coating methods that allow easy adjustment of the printing plate.

The components of the thermoplastic polymer-containing coating solution may be the constituent elements of the thermoplastic polymer-containing layer described above.

When the thermoplastic polymer-containing coating solution is applied onto a substrate such as a polyolefin microporous membrane, from the viewpoints of controlling the ratio of the region where the particulate polymer is present and the region where the particulate polymer is stacked in a cross section passing through the center of the dot-shaped pattern of the thermoplastic polymer-containing layer described above, and inhibiting the formation of a coffee ring, it is preferable to adjust the number of binder particles per unit volume of the coating droplet to $5 \times 10^8$ particles/$\mu$L or more and $5 \times 10^9$ particles/$\mu$L or less.

If the coating solution infiltrates to the inside of the microporous membrane when the thermoplastic polymer is coated on the polyolefin microporous membrane, the adhesive resin will become embedded on the surfaces and interiors of the pores, lowering the permeability. The medium of the coating solution is therefore preferably a poor solvent for the thermoplastic polymer.

A poor solvent for the thermoplastic polymer is preferably used as a medium of the coating solution, from the viewpoint of inhibiting reduction in permeability since the coating solution in the microporous film will fail to infiltrate and the adhesive polymer will be present mainly on the surface of the microporous film. Water is preferred as a medium with such properties. The medium that can be used in combination with water include, but are not particularly limited to, ethanol and methanol.

From the viewpoint of adjusting the dot-shaped pattern of the thermoplastic polymer-containing layer as described above, it is preferred to optimize the thermoplastic polymer-containing coating solution (also simply referred to as "coating material") using the thermoplastic polymer and poor solvent described above.

From the viewpoints of controlling the ratio of the region where the particulate polymer is present and the region where the particulate polymer is stacked in a cross section passing through the center of the dot-shaped pattern of the thermoplastic polymer-containing layer described above, and inhibiting a decrease in capacity and a decrease in energy density of the electricity storage device including a separator, the solid content of the coating material is 6% by weight or more and 35% by weight or less based on the total weight of the coating solution, preferably 10% by weight or more 33% by weight or less, more preferably 15% by weight or more 31% by weight or less, and still more preferably 30% by weight or less. From the viewpoint of inhibiting flowing of the coating solution, failing to maintain the dot shape, the solid content of the coating material is preferably 6% by weight or more.

From the viewpoints of controlling the ratio of the region where the particulate polymer is present and the region where the particulate polymer is stacked as described above, and inhibiting the formation of a coffee ring, the viscosity at 20°C of the coating material is 10 mPa·s or more and 100 mPa·s or less, and preferably 25 mPa·s or more and 80 mPa·s or less.

From the viewpoints of controlling the ratio of the region where the particulate polymer is present and the region where the particulate polymer is stacked in a cross section passing through the center of the dot-shaped pattern of the thermoplastic polymer-containing layer described above, and inhibiting the formation of a coffee ring, the surface tension of the coating material is 10 mN/m or more and 45 mN/m or less, preferably 20 mN/m or more and 40 mN/m or less, and more preferably 25 mN/m or more and 35 mN/m or less. From the viewpoint of inhibiting flowing of the coating solution, failing to maintain the dot shape, the surface tension of the coating material is preferably 10 mN/m or more.

From the viewpoints of controlling the ratio of the region where the particulate polymer is present and the region where the particulate polymer is stacked as described above, and inhibiting the formation of a coffee ring, the pH of the coating material is 6 or more and 10 or less, and preferably 7 or more and 9 or less.

The coating material is prepared by fabricating thermoplastic polymer particles using a technique such as emulsion polymerization or suspension polymerization, followed by the addition of a thickener or a preservative. The solid content of the coating material is adjusted to the desired concentration by the addition of a solvent. The viscosity of the coating material is adjusted by the addition of polymers such as xanthan gum, carboxymethyl cellulose and polyacrylamide. The surface tension of the coating material can be adjusted by adding, for example, a cationic, anionic or nonionic surfactant.

The average particle size ($D_{50}$) of the coating material containing a particulate polymer of a thermoplastic polymer is preferably adjusted within a range of 0.10 $\mu$m or more and 0.80 $\mu$m or less, from the viewpoints of controlling the ratio of the region where the particulate polymer is present and the region where the particulate polymer is stacked as described above, and inhibiting the formation of a coffee ring.

Further, a surface treatment of the microporous membrane serving as the separator substrate is also preferably carried out before application of the thermoplastic polymer-containing coating solution, in order to facilitate application of the coating solution and improved adhesion between the microporous membrane or the porous layer and the thermoplastic polymer. The method of surface treatment is not particularly limited, as long as it does not significantly impair the porous structure of the microporous membrane, and examples include corona discharge treatment, plasma treatment, mechanical roughening methods, solvent treatment, acid treatment, ultraviolet oxidation and the like.

For a corona discharge treatment, the intensity of the corona treatment on the substrate surface is preferably within a range of 1 $W/(m^2/min)$ or more and 40 $W/(m^2/min)$ or less, more preferably 3 $W/(m^2/min)$ or more and 32 $W/(m^2/min)$ or less, and still more preferably 5 $W/(m^2/min)$ or more and 25 $W/(m^2/min)$ or less. An intensity of corona treatment within the above range will tend to increase affinity with the electrolyte solution by introduction of hydrophilic groups into the hydrophobic surface, while also improving the wettability and enabling control of the spreading of the coating solution during dot formation. The corona discharge treatment is also preferably carried out after the dot-shaped pattern has been formed in the thermoplastic polymer-containing layer by coating.

The method of removing the solvent from the coated film after application of the coating solution is not particularly limited, as long as it is a method that does not adversely affect the porous membrane. For example, it may be a method of drying the porous membrane at a temperature below its melting point while anchoring it, a method of reduced pressure drying at low temperature, or a method of immersing it in a poor solvent for the adhesive polymer to solidify the adhesive polymer while simultaneously extracting out the solvent.

The drying speed of the coated film is preferably within a range of 0.06 $g/(m^2 \cdot s)$ or more and 4.0 $g/(m^2 \cdot s)$ or less, more preferably 0.10 $g/(m^2 \cdot s)$ or more and 4.0 $g/(m^2 \cdot s)$ or less, and still more preferably 0.20 $g/(m^2 \cdot s)$ or more and 3.0 $g/(m^2 \cdot s)$ or less. The drying speed within the above range will be a suitable drying speed, tending to reduce leveling, and appropriately controlling an irregular structure for the thermoplastic polymer particles on the dot surfaces. From the same viewpoint, the temperature is preferably increased by warming or heating during drying of the coated film, to an extent that does not degrade the particle shapes in the thermoplastic polymer-containing layer.

For the coating step, from the viewpoint of controlling the ratio of the region where the particulate polymer is present and the region where the particulate polymer is stacked as described above, the coating step is preferably carried out so that the basis weight of the thermoplastic polymer-containing layer on at least one side of the substrate is 0.03 $g/m^2$ to 0.5 $g/m^2$.

The method for producing a separator may, if desired, further comprising, between the steps of preparing a substrate and forming a thermoplastic polymer-containing layer, a step of applying a coating solution containing inorganic particles onto the substrate surface to form an inorganic particle-containing layer.

Since the formed inorganic particle-containing layer can be regarded as the porous layer described above, the components of the coating solution containing inorganic particles may be the constituent elements of the porous layer described above. As inorganic particles, the inorganic fillers described above may be used.

The coating solution containing inorganic particles can be applied onto the substrate surface in the same manner as in the method for forming a porous layer described above. From the viewpoints of controlling the ratio of the region where the particulate polymer is present and the region where the particulate polymer is stacked in the cross section passing through the center of the dot-shaped pattern of the thermoplastic polymer-containing layer described above, and controlling the penetration of the thermoplastic polymer-containing coating solution into the inorganic particle-containing layer, the pore size of the inorganic particle-containing layer is preferably adjusted to 0.03 $\mu$m or more and 0.4 $\mu$m or less, more preferably 0.05 $\mu$m or more and 0.25 $\mu$m or less, and still more preferably 0.08 $\mu$m or more and 0.20 $\mu$m or less. Taking the pore size of the inorganic particle-containing layer into consideration, the solid concentration, viscosity, surface tension, and particulate polymer of the coating material containing a particulate polymer of a thermoplastic polymer can be adjusted to control the ratio of the region where the particulate polymer is stacked.

In order to uniformly control the height of the region where the particulate polymer is stacked to more than one layer and three layers or less, for example, it is preferable to adjust the pore size of the inorganic particle-containing layer to 0.03 $\mu$m or more and 0.4 $\mu$m or less as mentioned above, and also to adjust the physical properties of the coating material to a solid concentration of 9% by weight or more and 30% by weight or less, a viscosity of 25 mPa·s or more and 60 mPa·s or less, a surface tension of 25 mN/m or more and 39 mN/m or less, and an average particle size of the particulate polymer of 0.50 $\mu$m or more and 0.80 $\mu$m or less.

[Stacked Body]

A stacked body to be provided as another aspect of the present invention is obtained by stacking a separator and electrodes. The separator according to the first and/or second embodiment(s) may be used as a stacked body by bonding with the electrodes. The stacked body has excellent handleability during winding and provides excellent rate characteristics for an electricity storage device, while also exhibiting excellent adhesion and permeability for the thermoplastic polymer and polyolefin microporous membrane. Therefore, there are no particular limitation on usage of the stacked body, and suitable uses include electricity storage devices, among which are batteries such as non-aqueous electrolyte solution secondary batteries, and condensers or capacitors.

An electrode to be used in the stacked body may be any one mentioned below under "Electricity Storage Device". The method for producing the stacked body using a separator is not particularly limited, and for example, production may be by stacking the separator of the present embodiment with the electrodes, if necessary while heating and/or pressing. The heating and/or pressing can be carried out during stacking of the electrodes and separator. Alternatively, the production method may be stacking of the electrodes and separator, followed by winding into a circular or flat spiral shape to obtain a wound body which is then heated and/or pressed.

The stacked body may also be produced by flat stacking in the order: positive electrode-separator-negative electrode-separator or negative electrode-separator-positive electrode-separator, if necessary with heating and/or pressing. From the viewpoint of efficiently exhibiting the effect of the present invention, the stacking is preferably carried out in a manner such that the positive electrode and the side of the separator which has the porous layer described above are disposed facing each other, in terms of the substrate of the separator.

More specifically, the separator described above may be prepared as a longitudinal separator with a width of 10 to 500 mm (preferably 80 to 500 mm) and a length of 200 to 4,000 m (preferably 1,000 to 4,000 m), with the separator being stacked during production according to the order: positive electrode-separator-negative electrode-separator or negative electrode-separator-positive electrode-separator, if necessary with heating and/or pressing.

The heating temperature is preferably 40 to 120°C. The heating time is preferably 5 seconds to 30 minutes. The pressing pressure is preferably 1 to 30 MPa. The pressing time is also preferably 5 seconds to 30 minutes. The order of heating and pressing may be heating followed by pressing, pressing followed by heating, or simultaneous pressing and heating. Simultaneous pressing and heating is preferred.

<Electricity Storage Device>

The separator may be used as a separator for a battery, condenser or capacitor, or it may be used for separation of substances. When used as a separator for an electricity storage device, it is possible to provide adhesiveness for the electrodes and excellent battery performance. Hereinafter, preferable aspect in which the electricity storage device is a non-aqueous electrolyte solution secondary battery will be described.

For the production of a non-aqueous electrolyte solution secondary battery using the separator according to the first and/or second embodiment(s), there are no limitations for the positive electrode, negative electrode or non-aqueous electrolyte solution, and any publicly known ones may be used.

The positive electrode material is not particularly limited, and examples include lithiumcontaining composite oxides such as $LiCoO_2$, $LiNiO_2$, spinel-type $LiMnO_4$ and olivine-type $LiFePO_4$.

The negative electrode material is also not particularly limited, and examples include carbon materials such as graphite, non-graphitizable carbon, easily graphitizable carbon and complex carbon; or silicon, tin, metal lithium, various alloy materials and the like.

The non-aqueous electrolyte solution is not particularly limited, and for example, an electrolyte solution with an electrolyte dissolved in an organic solvent may be used, with examples of organic solvents including propylene carbonate, ethylene carbonate, dimethyl carbonate, diethyl carbonate and ethylmethyl carbonate, and examples of electrolytes including lithium salts such as $LiClO_4$, $LiBF_4$ and $LiPF_6$.

The method for producing an electricity storage device using the separator according to the first and/or second embodiment(s) is not particularly limited, and when the electricity storage device is a secondary battery, for example, it can be produced by first preparing separators described above as longitudinally shaped separators each with a width of 10 to 500 mm (preferably 80 to 500 mm) and a length of 200 to 4,000 m (preferably 1,000 to 4,000 m), stacking the separators in the order: positive electrode-separator-negative electrode-separator, or negative electrode-separator-positive electrode-separator, winding the stack into a circular or flat spiral form to obtain a wound body, and inserting the wound body into a battery can and further injecting an electrolyte solution into it.

A stacked body can then be formed by subjecting the wound body to heating and/or pressing. The wound body can also be produced using the stacked body wound into a circular or flat spiral form. The electricity storage device can alternatively be produced through a step of injecting an electrolyte solution into a flat stack in the order: positive electrode-separator-negative electrode-separator or negative electrode-separator-positive electrode-separator, or the stacked body laminated with a bag-like film, optionally through a step of heating and/or pressing. The step of heating and/or pressing may be carried out before and/or after the step of injecting the electrolyte solution.

From the viewpoint of efficiently exerting the effect of the present invention in an electricity storage device including a positive electrode, a negative electrode, a separator, and a non-aqueous electrolyte solution, preferably the side of the separator with the porous layer described above is disposed in a manner facing the positive electrode, in terms of the substrate.

Unless otherwise specified, the measured values for the different parameters mentioned above are the values measured by the measuring methods in the following Examples.

EXAMPLES

Hereinafter, the present invention will be described in detail by way of Examples and Comparative Examples, with the understanding that these Examples are in no way limitative on the present invention. The methods of measuring and evaluating the physical properties used in the following Production Examples, Examples and Comparative Examples were as follows. Unless otherwise specified, measurement and evaluation were carried out under conditions of room temperature at 23°C, 1 atmosphere, and 50% relative humidity.

[Measuring Methods]

<Viscosity-Average Molecular Weight (hereinafter also referred to as "Mv")>

The limiting viscosity [η] at 135°C with a decalin solvent was determined based on ASRM-D4020, and the Mv of polyethylene was calculated by the following formula.

$$[\eta] = 0.00068 \times Mv^{0.67}$$

The Mv of polypropylene was calculated by the following formula.

$$[\eta] = 1.10 \times 10^{-4} Mv^{0.80}$$

<Average Particle Size of Thermoplastic Polymer>

The average particle size of a thermoplastic polymer was measured using a particle size measuring device (Microtrac MT3300EXII, manufactured by Nikkiso Co., Ltd.). An aqueous dispersion of thermoplastic polymer particles was prepared (solid concentration: 25 to 30%). The measurement conditions were as follows: a loading index of 0.15 to 0.3 and a measurement time of 300 seconds. The numerical value of the particle size with the cumulative frequency of 50% in the obtained data was defined as the average particle size ($\mu$m), and is shown in Tables 1-1 to 1-3 below.
The average particle size of the thermoplastic polymer may be calculated by measuring the particle sizes of 100 different thermoplastic polymer particles when observed using a scanning electron microscope (SEM) (model: S-4800, manufactured by Hitachi, Ltd.) at a magnification at which the diameter of a single particle can be measured (for example, a magnification of 10,000 times when the thermoplastic polymer has an average particle size of about 0.5 $\mu$m).

<Basis Weight of Polyolefin Microporous Membrane and Basis Weight Per Side of Thermoplastic Polymer-Containing Layer>

A 10 cm × 10 cm-square sample was cut out from a substrate (polyolefin porous substrate or polyolefin porous substrate + inorganic filler porous layer), and the weight was measured using an AEL-200 electronic scale manufactured by Shimadzu Corporation. The obtained weight was multiplied by 100 to calculate the basis weight ($g/m^2$) of the membrane per 1 $m^2$.
A 10 cm × 10 cm-square sample was cut out from the separator having a thermoplastic polymer-containing layer formed thereon, and an AEL-200 electronic scale was used to measure its weight. The obtained weight was multiplied by 100 to calculate the basis weight ($g/m^2$) of the separator per 1 $m^2$.
The basis weight per side of the thermoplastic polymer-containing layer was calculated from the difference in basis weight between the substrate and the separator.
When a porous layer is formed between the substrate surface and the thermoplastic polymer-containing layer, the weight before and after the formation of the porous layer is measured as mentioned above, and the basis weight of the porous layer can be calculated from the weight difference before and after the formation of the thermoplastic polymer-containing layer.
Alternatively, the basis weight per side of the thermoplastic polymer-containing layer can be determined by peeling off the thermoplastic polymer-containing layer from the surface of a 10 cm × 10 cm-square sample and calculating the weight reduction using a thermogravimetric differential thermal analyzer (NEXTA STA 200RV, manufactured by Hitachi High-Tech Science, Ltd.). When peeling off the thermoplastic polymer-containing layer, the workability can be improved by carrying out a pretreatment such as swelling with a solvent such as acetone or ethanol.

<Porosity (%) of Polyolefin Microporous Membrane>

A 10 cm $\times$ 10 cm-square sample was cut out from the polyolefin microporous membrane, and its volume (cm$^3$) and mass (g) were determined and used for calculation by the following formula, using 0.95 (g/cm$^3$) as the membrane density.

$$\text{Porosity} = (\text{volume} - \text{mass/membrane density})/\text{volume} \times 100$$

<Membrane Thickness ($\mu$m)>

Using a micro thickness gauge "KBM (trademark)" manufactured by Toyo Seiki Seisakusho, Ltd., the thickness of a polyolefin microporous membrane, a membrane coated with a porous layer on both sides, and a membrane coated with a porous layer only on one side were measured at room temperature (23 + 2°C), and the thickness of the porous layer was calculated from these thicknesses. For films having a thermoplastic polymer-containing layer, the thickness of each layer was measured using a cross-sectional SEM image.

<Air Permeability (sec/100 cm$^3$)>

The air permeability was determined as the air permeability resistance measured with a Gurley air permeability tester (G-B2 (trademark), manufactured by Toyo Seiki Seisaku-sho, Ltd.), according to JIS P-8117.

<Puncture Strength (gf) of Polyolefin Microporous Membrane>

Using a Handy Compression Tester KES-G5 (trademark) by Kato Tech Corp., the polyolefin microporous membrane was anchored with a specimen holder having an opening diameter of 11.3 mm. Next, the center section of the anchored polyolefin microporous membrane was subjected to a puncture test with a needle having a tip curvature radius of 0.5 mm, at a puncture speed of 2 mm/sec in a 25°C atmosphere, obtaining the puncture strength (gf) as the maximum puncture load. The basis weight-equivalent puncture strength can also be calculated from the puncture strength and the basis weight.

<Glass Transition Temperature (°C) of Thermoplastic Polymer>

A sufficient amount of the thermoplastic polymer coating solution (nonvolatile content = 30%) was placed in an aluminum tray and dried for 30 minutes in a hot air drier at 130°C. About 5 mg of the dried film was packed into a measuring aluminum container, and the DSC curve and DDSC curve were obtained using a DSC measuring apparatus (DSC Q2000, manufactured by TA Instruments) under a nitrogen atmosphere. The measuring conditions were as follows.

(First stage temperature increase program)

40°C start, temperature increase at 50°C/minute. The temperature was maintained for 5 minutes after reaching 200°C.

(Second stage temperature decrease program)

Temperature decrease from 200°C at 20°C/minute. The temperature was maintained for 5 minutes after reaching -50°C.

(Third stage temperature increase program)

Temperature increase from -50°C to 200°C at 20°C/minute. Recording of DSC and DDSC data during the third stage heating.

In accordance with the method mentioned in JIS-K7121, the intersection between the baseline (an extended straight line toward the high-temperature end from the baseline of the obtained DSC curve) and the tangent line at the inflection point (the point where the upwardly convex curve changed to a downwardly convex curve) was defined as the glass transition temperature (Tg).

<Total Coverage Area Ratio (%) of Thermoplastic Polymer-Containing Layer to Substrate Surface>

The coverage area ratio of the coating pattern of the thermoplastic polymer-containing layer to the substrate surface was measured using a microscope (model: VHX-7000, manufactured by Keyence Corporation). The separator sample was photographed by coaxial lighting at a magnification at which 10 or more dots can be observed simultaneously (for example, a magnification of 100 times when the dot diameter is about 200 $\mu$m). From the command "Measurement/Scale", "Automatic area measurement (particle count)", "Extraction method: Brightness (standard)," and "Fill holes" are selected, and an appropriate brightness (preferably - 10 or more and 10 less) to binarize the covered and uncovered portions of the thermoplastic polymer-containing layer, and then the total covered area ratio of the thermoplastic polymer-containing layer is measured. If the contrast is unclear, a different light source (model: PD2-1024, manufactured by CCS Inc.) may be used.

<Cross-Sectional Observation>

The separator sample is subjected to cross section processing with a BIB (broad ion beam). The cross section processing is carried out using an IM4000 manufactured by Hitachi High-Technologies Corp., under processing conditions with an argon beam species, an acceleration voltage of 3 kV and a beam current of 25 to 35 $\mu$A. In order to reduce heat damage during processing, the multilayer porous membrane is cooled as necessary just before processing. Specifically, the multilayer porous membrane is left to stand for whole day and night in a cooling device at -40°C. This allows a smooth cross section of the separator to be obtained.

(Measurement of Stacking Ratio of Thermoplastic Polymer-Containing Layer)

The stacking ratio of the thermoplastic polymer-containing layer was measured using a scanning electron microscope (SEM) (model: S-4800, manufactured by Hitachi, Ltd.). The smooth separator cross section was vapor-deposited with osmium, and the cross section of one dot was observed over the entire dot diameter under conditions of an acceleration voltage of 1.0 kV and a magnification of 5,000 times, and the ratio of the region where (n $\geq$ 1) layers of thermoplastic polymer particulate polymer were stacked to the region where one or more thermoplastic polymer-containing layers are present was calculated.

(Measurement of Height of Thermoplastic Polymer-Containing Layer)

The height of the thermoplastic polymer-containing layer was measured using a scanning electron microscope (SEM) (Model S-4800, manufactured by Hitachi, Ltd.). The smooth separator cross section was vapor-deposited with osmium, and then observed under conditions with an acceleration voltage of 1.0 kV and a magnification of 5,000 times, and the maximum thickness of the thermoplastic polymer-containing layer was measured at five points, and the average of these was calculated as the height.

(Other Observations and Measurements)

In the same manner as above, the smooth cross section of the separator may be observed for the presence or absence of an inorganic porous layer containing an inorganic filler and a resin binder, and the average or maximum thickness of the substrate (i.e., average or maximum height), the average or maximum thickness of the inorganic porous layer (i.e., average or maximum height), the maximum height of the dots on one side of the separator, the sum or difference of the maximum heights of the dots on both sides of the separator, etc. may be calculated. In the case of the average thickness, the thickness was observed randomly in 3 to 5 fields of view on a smooth separator cross section, and the average value thereof was calculated as the average height. In the case of a dot-shaped pattern, the distance from the substrate surface to the apex of a dot along the thickness direction of the thermoplastic polymer-containing layer is defined as the maximum dot thickness, and the average dot height is calculated in the same manner as above.

<Average Pore Size of Porous Layer>

After obtaining a smooth separator cross section by the above cross section observation method, the mode diameter obtained by image processing using the method mentioned in WO 2021/006357 A was used as the average pore size of the porous layer.

<Characteristics of Coating Solution Containing Thermoplastic Polymer>

For the coating solution containing thermoplastic polymer, the viscosity at 20°C was measured using a B-type viscometer, and the pH was measured using a pH meter.

<Adhesion to Electrodes>

The separators for an electricity storage device obtained for each of the Examples and Comparative Examples, and positive electrodes as adherends (manufactured by Enertech, positive electrode material: LiCoO2, conductive aid: acetylene black, L/W: 36 mg/cm$^2$ for both sides, Al current collector thickness: 15 $\mu$m, thickness of positive electrode after pressing: 120 $\mu$m) were each cut out into rectangular shapes having a width of 15 mm and a length of 60 mm, and then these were stacked with the thermoplastic polymer-containing layer of the separator facing the positive electrode active material to obtain a stacked body, and the stacked body was then pressed under the following conditions.

Press pressure: 1 MPa
Temperature: 100°C
Pressing time: 30 seconds

For each of the pressed stacked bodies, the force gauge ZP5N (product name) manufactured by Imada Co., Ltd., and MX2-500N (product name) manufactured by Imada Co., Ltd. were used for a 90° peel test at a peel rate of 50 mm/min, with a pulling system in which the electrodes were anchored and the separator held and pulled to measure the peel strength. At this time, the average value of the peel strength in the peel test over a length of 40 mm carried out under the above conditions was adopted as the adhesive force with the electrode. When a separator that achieves an adhesive force of 1.0 N/m or more and 10.0 N/m or less obtained by this method is used in an electricity storage device, the adhesive force with the opposing positive electrode and negative electrode becomes satisfactory. A porous layer may or may not be present between the thermoplastic polymer layer facing the positive electrode and the polyolefin microporous membrane. In the Examples and Comparative Examples, the surface where the porous layer was present between the thermoplastic polymer layer and the polyolefin microporous film was stacked with the positive electrode so as to face each other. It is preferable that the adhesive force between at least one surface of the separator and the positive electrode satisfies the above value, and it is more preferable that the adhesive force between the other surface and the positive electrode also satisfies the above range.

<Injectability of Electrolyte Solution>

The separators for an electricity storage device obtained for each of the Examples and Comparative Examples, and negative electrodes as adherends (manufactured by Enertech, negative electrode material: graphite, conductive aid: acetylene black, L/W: 20 mg/cm$^2$ for both sides, Cu current collector thickness: 10 $\mu$m, thickness of negative electrode after pressing: 140 $\mu$m) were each cut out into rectangular shapes having a width of 15 mm and a length of 60 mm, and then these were stacked with the thermoplastic polymer-containing layer of the separator facing the negative electrode active material to obtain a stacked body. The stacked body was sandwiched between two glass plates (S1214 manufactured by Matsunami Glass Ind., Ltd., size: 76 $\times$ 26 mm, thickness: 1.2 to 1.5 mm), anchored with clips (JB34c manufactured by Kokuyo Co., double clip (medium), silver, opening width: 25 mm) at both sides and the top, for a total of 3 points, and then immersed in an electrolyte solution (LBG-00307 manufactured by Kishida Chemical Co., Ltd., ethylene carbonate (EC):diethyl carbonate (DEC) = (2:3 volume/volume %)). The sections where the electrolyte solution permeated the separator and electrode surface were visually observed, and the time required for permeation of the total surface was adopted as the injection completion time. In an electricity storage device using a separator that achieves a permeation completion time of 8 minutes or less, and preferably 6 minutes or less obtained by this method, electrolyte solution penetration at the interfaces with the opposing the positive electrode and the negative electrode becomes satisfactory, and the injectability of the entire cell is improved. Therefore, the injectability was evaluated according to the following criteria.

[Evaluation Criteria]

A (Very Good): The injection completion time is 6 minutes or less.
B (Acceptable): The injection completion time is more than 6 minutes and 8 minutes or less.
C (Poor): The injection completion time is more than 8 minutes and less than 10 minutes.
D (Very Poor): The injection completion time is 10 minutes or more.

<Cycle Characteristics>

a. Fabrication of Positive Electrode

A slurry is prepared by dispersing 91% by weight of a lithium nickel manganese cobalt composite oxide (NCM111) as a positive electrode active material, 2.5% by weight each of flaky graphite and carbon black as conductive aids, and 4% by weight of polyvinylidene fluoride (PVDF) as a binder in N-methylpyrrolidone (NMP). This slurry was applied onto one side of a 15 $\mu$m-thick aluminum foil as a positive electrode collector using a die coater, and then dried at 120°C for about 4 minutes, followed by compression molding using a roll press. At this time, the coating amount of the active material on one side of the positive electrode was adjusted to 15.9 mg/cm$^2$ and the electrode density was adjusted to 2.4 g/cm$^3$ . The fabricated positive electrode was punched out to a circle having an area of 2.00 cm$^2$.

b. Fabrication of Negative Electrode

A slurry is prepared by dispersing 96.4% by weight of artificial graphite as a negative electrode active material, 1.7% by weight of a carboxymethyl cellulose as a binder, and 1.9% by weight of a styrene-butadiene copolymer latex in purified water. This slurry was applied onto one side of a 10 $\mu$m-thick copper foil as the negative electrode collector using a die coater, and dried at 90°C for about 4 minutes, followed by compression molding using a roll press. At this time, the coating amount of the active material on the negative electrode was adjusted to 8.3 mg/cm$^2$ and the electrode density was adjusted to 1.25 g/cm$^3$ . The fabricated negative electrode was punched out to a circle having an area of 2.05 cm$^2$.

c. Preparation of Nonaqueous Electrolyte Solution

LiPF$_6$ as a solute was dissolved in a mixed solvent of ethylene carbonate:ethylmethyl carbonate = 1:2 (volume ratio) so as to adjust the concentration to 1.0 mol/L, followed by the addition of 1% by weight of vinylene carbonate as an additive, thus preparing a nonaqueous electrolyte solution.

d. Battery Assembly and Evaluation

A negative electrode, a separator and a positive electrode are stacked in that order in the vertical direction, with the active material sides of the positive electrode and negative electrode facing each other, and housed in a stainless steel metal container with a cover. The container and cover are insulated, with the container in contact with the copper foil of the negative electrode and the cover in contact with the aluminum foil of the positive electrode. The container interior is injected with the nonaqueous electrolyte solution prepared in the above c., followed by sealing.

Each simple battery assembled as mentioned above was subjected to initial charging after battery fabrication by a method of charging to a cell voltage of 4.2 V at a current value of 0.24 mA (about 0.05 C) in a 25°C atmosphere and further beginning to draw out the current value from 0.24 mA while maintaining 4.2 V, and then to discharge up to a current value of 0.03 mA. Further, initial charging/discharging was carried out by discharging to a cell voltage of 3.0 V at a current value of 0.96 mA (about 0.2 C).

Next, a cycle was repeated by a method of charging to a cell voltage of 4.2 V at a current value of 4.8 mA (about 1.0 C) in a 45°C atmosphere and further beginning to draw out the current value from 4.8 mA while maintaining 4.2 V, and then to discharge up to a current value of 0.03 mA, followed by discharging to a cell voltage of 3.0 V at a current value of 4.8 mA. This operation was defined as 1 cycle, and charging and discharging of the simple battery were repeated. The cycle characteristics were evaluated based on the capacity retention ratio after 300 cycles with respect to the initial capacity of the simple battery (the capacity at the first cycle) according to the following criteria.

[Evaluation Criteria]

A (Very Good): Capacity retention ratio of 65% or more
B (Acceptable): Capacity retention ratio of 60% or more and less than 65%
C (Poor): Capacity retention ratio of 55% or more and less than 60%
D (Very Poor): Capacity retention ratio of less than 55%

<Measurement of Contact Angle of Electrolyte Solution>

A glass plate (S1214, manufactured by Matsunami Glass Co., Ltd., size: 76 $\times$ 26 mm, thickness: 1.2 to 1.5 mm) was attached to the measurement surface and the opposite surface of the separator for the electricity storage device obtained in each Example and Comparative Example using double-sided tape (NICHIBAN Co., Ltd., NICETACK, NW-15) to prepare a measurement sample. Using a dynamic contact angle meter (Kyowa Interface Science Co., Ltd., model DCA-VM), an electrolyte solution (Kishida Chemical Co., Ltd., LBG-00307, EC/DEC (2:3 v/v%)) was applied onto the sample, and the contact angle was measured 6,000 ms after the liquid separated. The contact angle was measured in a thermostatic chamber at a temperature of 23°C and a humidity of 42%.

<Measurement of Swelling Degree>

The material used for the uniform diffusion layer was vacuum dried at a temperature below its melting point for 12 hours, and the solvent was completely removed to obtain a dried material for the uniform diffusion layer. About 0.5 g of the resulting dried product was weighed and designated as the weight before immersion ($W_A$). This dried material was placed in a 50 mL vial together with 10 g of an electrolyte solution of ethylene carbonate (EC):diethyl carbonate (DEC) = 1:2 (volume ratio) containing 1 mol/L $LiPF_6$ at 25°C, and immersed for 72 hours. After that, the sample was removed and wiped with towel paper, and immediately after the weight was measured and recorded as the weight after immersion ($W_B$).
The degree of swelling of the uniform diffusion layer with the electrolyte was calculated from the following formula.

$$\text{Swelling degree } (\%) = W_B / W_A \times 100$$

In the above formula, if the material of the uniform diffusion layer does not swell or dissolve in the electrolyte, the swelling degree will be 100%.

<Measurement of Surface Tension>

Using a bubble pressure dynamic surface tensiometer (BP100, manufactured by KRUSS), the paint was filled into a dedicated glass cell, and the surface tension of the paint was then measured using a capillary with a diameter of 0.300 to 0.380 mm. The surface tension was calculated using the maximum bubble pressure method. The surface tension is defined as the value 10 seconds (s) after the start of measurement.

<Heat Shrinkage Ratio (%) at 150°C>

As a sample, the porous membrane or multilayer porous membrane was cut to a size of 100 mm in the MD direction and 100 mm in the TD direction, and left to stand in an oven at 150°C for 1 hour. At this time, the sample was sandwiched between 10 sheets of paper so that the hot air would not directly hit the sample. After the sample was removed from the oven and cooled, the length (mm) was measured and the thermal shrinkage was calculated according to the following formula. The measurements were carried out in the MD and TD directions, and the larger value was defined as the heat shrinkage rate.

$$\text{Heat shrinkage ratio } (\%) = \{(100 - \text{length after heating})/100\} \times 100$$

<Thermoplastic Polymer>

The following thermoplastic polymers were prepared.
Acrylic 1: A high Tg (Tg = 95°C) acrylic latex and a low Tg (Tg < 20°C) acrylic latex were blended to form a latex blend (Acrylic 1, average particle size: 0.55 $\mu$m, swelling degree of 6 times).
Acrylic 2: A high Tg (Tg = 67°C) acrylic latex and a low Tg (Tg < 20°C) acrylic latex were blended to form a latex blend (Acrylic 2, average particle size: 0.50 $\mu$m, swelling degree of 8 times).
Acrylic 3: A high Tg (Tg = 95°C) acrylic latex and a low Tg (Tg < 20°C) acrylic latex were blended to form a latex blend (Acrylic 3, average particle size: 0.50 $\mu$m, swelling degree of 6 times).
Acrylic 4: A high Tg (Tg = 95°C) acrylic latex and a low Tg (Tg < 20°C) acrylic latex were blended to form a latex blend (Acrylic 4, average particle size: 0.40 $\mu$m, swelling degree of 6 times).
PVDF: Commercially available polyvinylidene fluoride (PVDF-HFP copolymer, Tm = 150°C, average particle size: 0.20 $\mu$m) was prepared.

(Production of Polyolefin Microporous Membrane 1A)

47 Parts by weight of high-density polyethylene homopolymer having an Mv of 700,000, 46 parts by weight of high-density polyethylene homopolymer having an Mv of 300,000, and 7 parts by weight of polypropylene homopolymer having an Mv of 700,000 were dry blended using a tumbler blender. To 99 parts by weight of the obtained polyolefin mixture there was added 1 part by weight of tetrakis-[methylene-(3',5'-di-t-butyl-4'-hydroxyphenyl)propionate]methane as an antioxidant, and a tumbler blender was again used for dry blending to obtain a mixture. The obtained mixture was supplied to a twin-screw extruder using a feeder, under a nitrogen atmosphere. Liquid paraffin (kinematic viscosity at 37.78°C: 7.59 $\times$ 10$^{-5}$m$^2$/s) was also injected into the extruder cylinder by a plunger pump. The operating conditions for the feeder and pump were adjusted for a liquid paraffin content of 68 parts by weight, i.e., a polymer concentration of 32 parts by weight, in the total mixture to be extruded.

The contents were then melt-kneaded in the twin-screw extruder while heating to 160°C, the obtained melt kneaded mixture was extruded through a T-die onto a cooling roll controlled to a surface temperature of 80°C, and the extruded mixture was contacted with a cooling roll for casting and cooled to solidification to obtain a cast sheet. The sheet was then stretched by a Tenter Stretching Machine under the conditions of a factor of 7 $\times$ 6.4 and a temperature of 122°C, and the stretched sheet was immersed in methylene chloride for extraction removal of the liquid paraffin and then dried and stretched at a temperature of 132°C and a factor of 1.85 in the transverse direction. The stretched sheet was then relaxed to about 10% in the width direction and subjected to heat treatment to obtain polyolefin microporous membrane 1A.

The physical properties (basis weight, membrane thickness, porosity, air permeability, thickness, puncture strength, etc.) of the obtained polyolefin microporous membrane 1A were measured by the methods described above, as necessary. Table 2 shows the physical properties of the polyolefin microporous membrane 1A that can be used as a substrate.

(Production of Polyolefin Microporous Membrane 2A)

65 Parts by weight of homopolymer high density polyethylene having an Mv of 900,000 and 35 parts by weight of homopolymer high density polyethylene having an Mv of 300,000 were dry blended using a tumbler blender. To 99 parts by weight of the obtained polyolefin mixture, 1 part by weight of tetrakis-[methylene-(3',5'-di-t-butyl-4'-hydroxyphenyl) propionate]methane was added as an antioxidant to obtain a mixture. The mixture thus obtained was dry-blended again using a tumbler blender to obtain a mixture. The resulting mixture was fed by a feeder into a twin-screw extruder under a nitrogen atmosphere. Further, liquid paraffin (kinematic viscosity at 37.78°C: 7.59 $\times$ 10$^{-5}$m$^2$/s) was injected into the extruder cylinder by a plunger pump. The operating conditions of the feeder and pump were adjusted so that the proportion of liquid paraffin in the entire mixture to be extruded was 70 parts by weight, that is, so that the polymer concentration was 30 parts by weight.

Next, the contents were then melt-kneaded in a twin-screw extruder while being heated to 160°C, and the resulting melt-kneaded product was extruded through a T-die onto a cooling roll whose surface temperature was controlled to 80°C, and the extrudate was brought into contact with the cooling roll and cast, followed by cooling and solidification to obtain a sheet-like molded product. This sheet was stretched by a factor of 7 $\times$ 6.4 and at a temperature of 120°C using a simultaneous biaxial stretching machine, then immersed in methylene chloride to extract and remove the liquid paraffin, dried, and stretched 2.0 times in the transverse direction at a temperature of 132°C using Tenter Stretching Machine. Thereafter, the stretched sheet was relaxed by about 15% in the width direction and heat-treated to obtain a microporous polyolefin film 2A.

For the obtained polyolefin microporous membrane 2A, the physical properties (basis weight, membrane thickness, porosity, air permeability, puncture strength, etc.) were measured by the above-mentioned methods as necessary. Table 2 shows the physical properties of the polyolefin microporous membrane 2A that can be used as a substrate.

Formation of Porous Layer

The coating solution for forming a porous layer on the surface of polyolefin microporous membrane 1A was prepared by mixing 100 parts by weight of aluminum oxide hydroxide (boehmite, block-shaped; $D_{50}$ = 0.4 $\mu$m) as inorganic filler, 100 parts by weight of water, and 0.5 parts by weight of dispersant 1 (sodium polyacrylate; weight-average molecular weight 6,000; insoluble content less than 1.0% by weight when 1.0 g was dissolved in 100 g of water), and subjecting the mixture to a bead mill treatment. The bead mill treatment was carried out under the conditions of a bead diameter of 0.1 mm and a rotation speed within the mill of 2,000 rpm. To the treated mixture, 4 parts by weight of acrylic latex 1 (a copolymer having 80% by weight of units derived from butyl acrylate, 16% by weight of units derived from methyl methacrylate, 3% by weight of units derived from acrylic acid, and 1% by weight of units derived from acrylamide; $D_{50}$ = 150 nm, Tg = -28°C) as a water-insoluble binder, 0.5 part by weight of watersoluble binder 1 (sodium carboxymethylcellulose; weight average molecular weight 360,000; degree of etherification = 0.9; insoluble content less than 1.0% by weight when 1.0 g is dissolved in 100 g of water), and 0.1 part by weight of additive 1 (polyoxyethylene alkylene alkyl ether (EMULGEN LS-110, manufactured by Kao Corporation)) were mixed to prepare a coating solution.

One surface of the polyolefin microporous membrane 1A was subjected to a corona discharge treatment at a treatment intensity of 15 W/m$^2$/min). A coating solution was applied onto the surface after this treatment using a gravure coater. Thereafter, the coating solution on polyolefin microporous membrane 1A was dried at 60°C to remove water, and a porous layer having a thickness of 1.5 $\mu$m was formed on one side of polyolefin microporous membrane 1A to obtain a separator having a porous layer on one side, and if necessary, a similar layer was formed on the other side to obtain a separator having porous layers on both sides.

A porous layer can be formed on one or both sides of the polyolefin microporous membrane 2A in the same manner as above.

(Dot Coating of Thermoplastic Polymer-Containing Layer onto Polyolefin Microporous Membrane)

A porous layer was formed on both sides of a polyolefin microporous membrane (2A) using the inorganic filler-containing coating solution conditions shown in Table 1, and acrylic 1 was dot-coated as a coating solution onto one or both sides of the porous layer under conditions that result in a dot-shaped pattern, coverage area ratio, basis weight, stacking ratio, and maximum height shown in Table 1. The coating solution was then dried at 40°C to remove water from the coating solution, thereby obtaining a separator for an electricity storage device having a thermoplastic polymer-containing layer in a dot-shaped pattern on one or both sides. The dot diameter of the dot-shaped pattern was 220 $\mu$m, and the distance between dots was 180 $\mu$m. The obtained separator and a simple battery including the same were evaluated by the above-mentioned method. Further, physical properties (such as basis weight, membrane thickness, air permeability, puncture strength, etc.) were measured by the above methods, if necessary. The results obtained are also shown in Table 1.

<Examples 2 to 13, Comparative Examples 1 to 6>

As shown in Table 1, separators for an electricity storage device having a thermoplastic polymer-containing layer on one or both sides of a polyolefin microporous membrane were obtained in the same manner as in Example 1, except that conditions such as the type of substrate, the presence or absence of a porous layer on one or both sides of the substrate, inorganic filler-containing coating solution, porous layer thickness, thermoplastic polymer type, the presence or absence of dot coating, dot-shaped pattern, coverage area ratio, basis weight, stacking ratio, and maximum height were changed. The obtained separator and a simple battery including the same were evaluated by the above-mentioned method. The results obtained are also shown in Table 1.

In Example 12, the thermoplastic polymer-containing layer on the separator surface had a continuous portion in the MD direction, but the injectability was satisfactory.

In Examples 2, 8 and 10, a porous layer containing inorganic particles and a resin binder was formed on one side of a polyolefin microporous membrane (2A, 1A, 1A, sequentially), and a thermoplastic polymer-containing layer was applied in a dot-shaped pattern onto both sides of the porous layer under the conditions shown in Table 1 to obtain a separator having an asymmetric multilayer structure based on the microporous membrane.

# EP 4 553 986 A1

[Table 1-1]

| | | | | Example | | | | | | |
|---|---|---|---|---|---|---|---|---|---|---|
| | | | | 1 | 2 | 3 | 4 | 5 | 6 | 7 |
| Thermoplastic polymer-containing layer | Coating method | - | | dot | dot | dot | dot | dot | dot | dot |
| | Ratio of X >5 | % | | 0 | 27 | 0 | 0 | 0 | 0 | 0 |
| | Ratio of one layer < X ≤ three layers | % | | 63 | 40 | 80 | 85 | 76 | 74 | 94 |
| | Ratio of one layer | % | | 36 | 9 | 7 | 15 | 24 | 26 | 6 |
| | Ratio of region of one layer to region of one layer < X ≤ two layers | - | | 0.8 | 1.3 | 0.6 | 0.3 | 0.4 | 0.5 | 0.1 |
| | Ratio of one layer < X ≤ two layers | | | 44 | 7 | 12 | 45 | 66 | 54 | 71 |
| | Ratio of one layer | % | | 36 | 9 | 7 | 15 | 24 | 26 | 6 |
| | Ratio of two layers < X ≤ three layers | | | 19 | 33 | 69 | 41 | 10 | 20 | 23 |
| | Average particle size of thermoplastic polymer at high temperature side | μm | | 0.55 | 0.50 | 0.55 | 0.55 | 0.55 | 0.55 | 0.55 |
| | Tg of thermoplastic polymer at high temperature side | °C | | 95 | 67 | 95 | 95 | 95 | 95 | 95 |
| | Total coated area ratio | % | | 32 | 35 | 36 | 35 | 37 | 40 | 45 |
| | Basis weight of thermoplastic polymer-containing layer | $g/m^2$ | | 0.20 | 0.12 | 0.24 | 0.22 | 0.20 | 0.18 | 0.16 |
| | Sum of maximum heights of dots on both sides | μm | | 2.0 | 4.0 | 3.0 | 2.5 | 2.0 | 1.5 | 1.4 |
| | Difference in maximum height of dots on both sides | μm | | 0 | 2 | 0.1 | 0.1 | 0 | 0.2 | 0 |
| Porous layer | Side on which porous layer is formed | - | | both sides | one side | both sides | both sides | both sides | both sides | both sides |
| | Pore size of porous layer | μm | | 0.13 | 0.15 | 0.10 | 0.15 | 0.13 | 0.10 | 0.15 |
| | Thickness of porous layer on one side | μm | | 1.5 | 3.1 | 1.7 | 1.5 | 1.5 | 1.5 | 1.5 |
| Layer and dot structure | Thickness of substrate, or thickness of substrate and porous layer | μm | | 12.0 | 12.1 | 12.4 | 12.0 | 12.0 | 12.0 | 12.0 |
| | Thickness of thermoplastic polymer-containing layer/(thickness of substrate, or thickness of substrate and porous layer) | - | | 0.17 | 0.33 | 0.24 | 0.21 | 0.17 | 0.13 | 0.12 |
| Thermoplastic polymer-containing coating solution (coating material) | Solid content | % by weight | | 25 | 30 | 30 | 27 | 25 | 23 | 20 |
| | Viscosity | mPa·s | | 30 | 20 | 60 | 45 | 30 | 25 | 25 |
| | Surface tension | mN/m | | 30 | 26 | 26 | 29 | 31 | 33 | 37 |
| | pH | - | | 8 | 6 | 8 | 7 | 9 | 8 | 8 |
| Separator characteristics and battery performance | Dry adhesive force (100°C-1 MPa-30 s-facing positive electrode) | N/m | | 1.5 | 1.1 | 1.9 | 1.8 | 1.7 | 1.5 | 1.2 |
| | Injectability (injection completion time) | - | | A (5 min) | B (8 min) | B (7 min) | A (6 min) | A (5 min) | A (5 min) | A (5 min) |
| | Battery performance (cycle characteristics) | - | | A (70%) | B (61%) | A (65%) | A (68%) | A (70%) | A (69%) | A (67%) |
| | Basis weight | $g/m^2$ | | 9.7 | 9.8 | 10.4 | 9.7 | 9.7 | 9.7 | 9.7 |
| | Membrane thickness | μm | | 13.0 | 13.1 | 13.4 | 13.0 | 13.0 | 13.0 | 13.0 |
| | Puncture strength | gf | | 450 | 450 | 450 | 450 | 450 | 450 | 450 |
| | Air permeability | $sec/100\ cm^3$ | | 120 | 120 | 120 | 120 | 120 | 120 | 120 |
| | Heat shrinkage ratio at 150°C | % | | 1.5 | 1 | 1.4 | 1.5 | 1.5 | 1.5 | 1.5 |
| Substrate | | | | 2A | 2A | 2A | 2A | 2A | 2A | 2A |

33

[Table 1-2]

| | | | | Example | | | | | |
|---|---|---|---|---|---|---|---|---|---|
| | | | | 8 | 9 | 10 | 11 | 12 | 13 |
| Thermoplastic polymer-containing layer | Coating method | - | | dot | dot | dot | dot | dot | dot |
| | Ratio of X > 5 | % | | 0 | 0 | 16 | 0 | 0 | 26 |
| | Ratio of one layer < X ≤ three layers | % | | 65 | 97 | 55 | 64 | 53 | 44 |
| | Ratio of one layer | % | | 5 | 3 | 4 | 36 | 47 | 6 |
| | Ratio of region of one layer to region of one layer < X ≤ two layers | - | | 0.2 | 0.1 | 0.1 | 0.9 | 1.2 | 0.3 |
| | Ratio of one layer < X ≤ two layers | % | | 18 | 39 | 29 | 41 | 40 | 22 |
| | Ratio of one layer | | | 5 | 3 | 4 | 36 | 47 | 6 |
| | Ratio of two layers < X ≤ three layers | | | 47 | 58 | 26 | 23 | 13 | 22 |
| | Average particle size of thermoplastic polymer at high temperature side | μm | | 0.50 | 0.55 | 0.50 | 0.55 | 0.55 | 0.20 |
| | Tg of thermoplastic polymer at high temperature side | °C | | 95 | 95 | 67 | 95 | 95 | Tm 150 |
| | Total coated area ratio | % | | 40 | 35 | 20 | 47 | 49 | 37 |
| | Basis weight of thermoplastic polymer-containing layer | g/m$^2$ | | 0.24 | 0.20 | 0.12 | 0.16 | 0.14 | 0.20 |
| | Sum of maximum heights of dots on both sides | μm | | 4.0 | 2.0 | 4.0 | 1.4 | 1.4 | 3.5 |
| | Difference in maximum height of dots on both sides | μm | | 3 | 0 | 3 | 0.3 | 0.1 | 0.2 |
| Porous layer | Side on which porous layer is formed | - | | one side | both sides | one side | both sides | both sides | both sides |
| | Pore size of porous layer | μm | | 0.15 | 0.15 | 0.25 | 0.15 | 0.16 | 0.12 |
| | Thickness of porous layer on one side | μm | | 3.2 | 1.8 | 4.0 | 1.6 | 1.6 | 1.5 |
| Layer and dot structure | Thickness of substrate, or thickness of substrate and porous layer | μm | | 15.0 | 15.6 | 16.0 | 15.2 | 15.2 | 15.0 |
| | Thickness of thermoplastic polymer-containing layer/(thickness of substrate, or thickness of substrate and porous layer) | - | | 0.27 | 0.13 | 0.25 | 0.09 | 0.09 | 0.23 |
| Thermoplastic polymer-containing coating solution (coating material) | Solid content | % by weight | | 30 | 25 | 30 | 15 | 9 | 30 |
| | Viscosity | mPa·s | | 60 | 30 | 20 | 25 | 25 | 60 |
| | Surface tension | mN/m | | 25 | 32 | 33 | 38 | 39 | 30 |
| | pH | - | | 7 | 8 | 6 | 7 | 7 | 8 |
| Separator characteristics and battery performance | Dry adhesive force (100°C-1 MPa-30 s-facing positive electrode) | N/m | | 1.2 | 1.5 | 1.0 | 1.1 | 1.2 | 1.0 |
| | Injectability (injection completion time) | - | | A (6 min) | B (7 min) | B (8 min) | B (8 min) | B (8 min) | B (8 min) |
| | Battery performance (cycle characteristics) | - | | B (62%) | A (65%) | B (60%) | B (64%) | B (63%) | B (60%) |
| | Basis weight | g/m$^2$ | | 11.3 | 12.2 | 12.8 | 11.5 | 11.5 | 11.3 |
| | Membrane thickness | μm | | 16.0 | 16.6 | 17.0 | 16.2 | 16.2 | 16.0 |
| | Puncture strength | gf | | 500 | 500 | 500 | 500 | 500 | 500 |
| | Air permeability | sec/100 cm$^3$ | | 170 | 170 | 170 | 170 | 170 | 170 |
| | Heat shrinkage ratio at 150°C | % | | 1 | 1.3 | 1.3 | 1.4 | 1.4 | 1.5 |
| Substrate | | | | 1A | 1A | 1A | 1A | 1A | 1A |

[Table 1-3]

| | | | | Comparative Example | | | | | |
|---|---|---|---|---|---|---|---|---|---|
| | | | | 1 | 2 | 3 | 4 | 5 | 6 |
| Thermoplastic polymer-containing layer | | Coating method | - | dot | dot | dot | dot | - | - |
| | | Ratio of X > 5 | % | 43 | 37 | 34 | 32 | 0 | 0 |
| | | Ratio of one layer < X ≤ three layers | % | 30 | 25 | 26 | 26 | 0 | 38 |
| | | Ratio of one layer | % | 2 | 6 | 10 | 12 | 100 | 62 |
| | | Ratio of region of one layer to region of one layer < X ≤ two layers | - | 0.1 | 1.2 | 1.3 | 2.0 | - | 2.7 |
| | | Ratio of one layer < X ≤ two layers | | 15 | 5 | 8 | 6 | 0 | 23 |
| | | Ratio of one layer | % | 2 | 6 | 10 | 12 | 100 | 62 |
| | | Ratio of two layers < X ≤ three layers | | 15 | 20 | 18 | 20 | 0 | 15 |
| | | Average particle size of thermoplastic polymer at high temperature side | μm | 0.50 | 0.40 | 0.50 | 0.50 | 0.50 | 0.40 |
| | | Tg of thermoplastic polymer at high temperature side | °C | 95 | 95 | 95 | 95 | 95 | 95 |
| | | Total coated area ratio | % | 40 | 61 | 35 | 30 | 67 | 62 |
| | | Basis weight of thermoplastic polymer-containing layer | $g/m^2$ | 0.24 | 0.18 | 0.20 | 0.24 | 0.24 | 0.40 |
| | | Sum of maximum heights of dots on both sides | μm | 5.0 | 5.0 | 4.9 | 5.0 | 1.0 | 1.1 |
| | | Difference in maximum height of dots on both sides | μm | 0 | 0.2 | 0 | 0.1 | 0 | 0.1 |
| Layer and dot structure | Porous layer | Side on which porous layer is formed | - | both sides | both sides | both sides | both sides | both sides | both sides |
| | | Pore size of porous layer | μm | 0.15 | 0.15 | 0.10 | 0.15 | 0.10 | 0.15 |
| | | Thickness of porous layer on one side | μm | 1.5 | 1.6 | 1.5 | 1.6 | 1.5 | 1.5 |
| | | Thickness of substrate, or thickness of substrate and porous layer | μm | 12.0 | 12.2 | 12.0 | 15.2 | 15.0 | 15.0 |
| | | Thickness of thermoplastic polymer-containing layer/(thickness of substrate, or thickness of substrate and porous layer) | - | 0.42 | 0.41 | 0.41 | 0.33 | 0.07 | 0.07 |
| Thermoplastic polymer-containing coating solution (coating material) | | Solid content | % by weight | 40 | 8 | 32 | 8 | 3 | 8 |
| | | Viscosity | mPa·s | 90 | 5 | 110 | 10 | 10 | 10 |
| | | Surface tension | mN/m | 20 | 40 | 20 | 60 | 40 | 15 |
| | | pH | - | 10 | 10 | 6 | 10 | 6 | 6 |
| Separator characteristics and battery performance | | Dry adhesive force (100°C-1 MPa-30 sec-facing positive electrode) | N/m | 0.9 | 0.8 | 0.9 | 1.1 | 0.8 | 0.8 |
| | | Injectability (injection completion time) | - | B (8 min) | D (10 min) | D (10 min) | C (9 min) | D (10 min) | C (9 min) |
| | | Battery performance (cycle characteristics) | - | D (54%) | D (54%) | C (57%) | C (56%) | D (53%) | C (55%) |
| | | Basis weight | $g/m^2$ | 9.7 | 10.0 | 9.7 | 11.6 | 11.2 | 11.3 |
| | | Membrane thickness | μm | 13.0 | 13.2 | 13.0 | 16.2 | 16.0 | 16.0 |
| | | Puncture strength | gf | 450 | 450 | 450 | 500 | 500 | 500 |
| | | Air permeability | sec/100 $cm^3$ | 120 | 120 | 120 | 170 | 170 | 170 |
| | | Heat shrinkage ratio at 150°C | % | 1.5 | 1.4 | 1.5 | 1.4 | 1.5 | 1.5 |
| | | Substrate | | 2A | 2A | 2A | 1A | 1A | 1A |

[Table 2]

| Physical properties | unit | Substrate | |
|---|---|---|---|
| | | 1A | 2A |
| Basis weight | g/m$^2$ | 6.4 | 4.7 |
| Membrane thickness | μm | 12.0 | 9.0 |
| Porosity | % | 45 | 45 |
| Puncture strength | gf | 500 | 450 |
| Air permeability | sec/100 cm$^3$ | 150 | 100 |

REFERENCE SIGNS LIST

1: Separator
2: Particulate polymer
3: Substrate
4: Particle scattering region
L: Observation length
X: Number of layers of particulate polymer
a: Dot diameter
b: Dot distance

**Claims**

1. A separator for an electricity storage device, comprising a substrate and a thermoplastic polymer-containing layer containing a thermoplastic polymer formed on at least one surface of the substrate, wherein

   the thermoplastic polymer contains a particulate polymer,
   the thermoplastic polymer-containing layer has a dot-shaped pattern, and
   in a cross section passing through a center of the dot-shaped pattern, a ratio ($R_{X > 5 / X \geq 1}$) of a region where more than five layers of the particulate polymer are stacked to a region where one or more layers of the particulate polymer are present is 30% or less.

2. A separator for an electricity storage device, comprising a substrate and a thermoplastic polymer-containing layer containing a thermoplastic polymer formed on at least one surface of the substrate, wherein

   the thermoplastic polymer contains a particulate polymer,
   the thermoplastic polymer-containing layer has a dot-shaped pattern, and
   in a cross section passing through a center of the dot-shaped pattern, a ratio ($R_{1 < X \leq 3 / X \geq 1}$) of a region where more than one and three or less layers of the particulate polymer are stacked to a region where one or more layers of the particulate polymer are present is 40% or more and 100% or less.

3. The separator for an electricity storage device according to claim 1 or 2, wherein, in the cross section passing through the center of the dot-shaped pattern, a ratio ($R_{0 < X \leq 1 (X = 1) / X \geq 1}$) of a region where one layer of the particulate polymer is stacked to a region where one or more layers of the particulate polymer are present is 50% or less.

4. The separator for an electricity storage device according to claim 1 or 2, wherein, in the cross section passing through the center of the dot-shaped pattern, when a ratio ($R_{1 < X \leq 2 / X \geq 1}$) of a region where more than one and two or less layers of the particulate polymer are stacked to a region where one or more layers of the particulate polymer are present is A, and a ratio ($R_{0 < X \leq 1 (X = 1) / X \geq 1}$) of a region where one layer of the particulate polymer is stacked to a region where one or more layers of the particulate polymer are present is B, a ratio of B to A ($R_{0 < X \leq 1 (X = 1) / X \geq 1} / R_{1 < X \leq 2 / X \geq 1}$) is 0 or more and 1 or less.

5. The separator for an electricity storage device according to claim 1 or 2, wherein, in the cross section passing through the center of the dot-shaped pattern, a ratio $(R_{n < X \leq n+1/X \geq 1})$ of a region where more than n and (n+1) or less layers of the particulate polymer are stacked to a region where one or more layers of the particulate polymer are present satisfies the following formula:

$$(R_{1 < X \leq 2/X \geq 1}) \geq (R_{0 < X \leq 1 (x=1)/X \geq 1}) \geq (R_{2 < X \leq 3/X \geq 1}) \geq (R_{n < X \leq n+1/X \geq 1})$$

where n is an integer of 3 or more.

6. The separator for an electricity storage device according to claim 1 or 2, wherein the particulate polymer has an average particle size of 0.10 $\mu$m or more and 0.80 $\mu$m or less.

7. The separator for an electricity storage device according to claim 1 or 2, wherein the thermoplastic polymer has at least two glass transition temperatures, at least one of the glass transition temperatures is within a range of lower than 20°C, and at least one of the glass transition temperatures is within a range of 40°C or higher and 110°C or lower.

8. The separator for an electricity storage device according to claim 1 or 2, wherein a total coverage area ratio of the thermoplastic polymer to the at least one surface of the substrate is 3% or more and 60% or less.

9. The separator for an electricity storage device according to claim 1 or 2, wherein a basis weight of the thermoplastic polymer-containing layer on the at least one surface is 0.03 g/m$^2$ to 0.5 g/m$^2$.

10. The separator for an electricity storage device according to claim 1 or 2, wherein a porous layer containing an inorganic filler and a resin binder is formed between the at least one surface of the substrate and the thermoplastic polymer-containing layer.

11. The separator for an electricity storage device according to claim 10, wherein the porous layer has a pore size of 0.03 $\mu$m or more and 0.40 $\mu$m or less.

12. The separator for an electricity storage device according to claim 10, wherein a ratio of a thickness of the thermoplastic polymer-containing layer to a thickness of the substrate or to a thickness of the substrate and the porous layer is 0.10 or more and 0.40 or less.

13. The separator for an electricity storage device according to claim 10, wherein the thermoplastic polymer-containing layer is provided on both sides of the substrate, a sum of maximum heights of the dots on the both sides is 0.2 $\mu$m or more and 4.5 $\mu$m or less, and a difference between the maximum heights of the dots on the both sides is more than 0.0 $\mu$m and 1.0 $\mu$m or less.

14. A method for producing a separator for an electricity storage device, comprising the steps of:

preparing a substrate, and
applying a coating solution containing a thermoplastic polymer onto at least one surface of the substrate to form a thermoplastic polymer-containing layer, wherein
the coating solution has a solid content of 6% by weight or more and 35% by weight or less based on the total weight of the coating solution, a viscosity of 10 mPa·s or more and 100 mPa·s or less, a surface tension of 10 mN/m or more and 45 mN/m or less, and a pH of 6 or more and 10 or less.

15. The method for producing a separator for an electricity storage device according to claim 14, further comprising, between the steps of preparing a substrate and forming a thermoplastic polymer-containing layer, applying another coating solution containing inorganic particles onto the substrate surface to form an inorganic particle-containing layer.

16. An electricity storage device comprising a positive electrode, a negative electrode, the separator for an electricity storage device according to claim 10, and a non-aqueous electrolyte solution, wherein the separator for an electricity storage device is disposed such that a side having the porous layer faces the positive electrode with respect to the substrate.

# Fig. 1

2

X=1
X:NUMBER OF LAYERS

1<X≦2

2<X≦3

# Fig. 2

X LAYER

1

1<X≦2    2<X≦3    1<X≦2

2

X=1

X=1

3

L

# Fig. 3

## INTERNATIONAL SEARCH REPORT

| | International application No. |
|---|---|
| | **PCT/JP2023/025323** |

### A. CLASSIFICATION OF SUBJECT MATTER

*H01M 50/463*(2021.01)i; *H01M 10/0566*(2010.01)i; *H01M 50/403*(2021.01)i; *H01M 50/414*(2021.01)i; *H01M 50/434*(2021.01)i; *H01M 50/443*(2021.01)i; *H01M 50/449*(2021.01)i; *H01M 50/451*(2021.01)i; *H01M 50/457*(2021.01)i; *H01M 50/46*(2021.01)i; *H01M 50/489*(2021.01)i

FI: H01M50/463 A; H01M50/449; H01M50/463 B; H01M50/443 E; H01M50/489; H01M50/443 M; H01M50/451; H01M50/434; H01M50/403 D; H01M10/0566; H01M50/46; H01M50/414; H01M50/443 C; H01M50/457

According to International Patent Classification (IPC) or to both national classification and IPC

### B. FIELDS SEARCHED

Minimum documentation searched (classification system followed by classification symbols)

H01M50/463; H01M10/0566; H01M50/403; H01M50/414; H01M50/434; H01M50/443; H01M50/449; H01M50/451; H01M50/457; H01M50/46; H01M50/489

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2020-191179 A (ASAHI KASEI KABUSHIKI KAISHA) 26 November 2020 (2020-11-26) claims, paragraphs [0001], [0074]-[0077], [0180], [0193] | 14-15 |
| A | | 1-13, 16 |
| Y | JP 2021-157895 A (ASAHI KASEI KABUSHIKI KAISHA) 07 October 2021 (2021-10-07) claims, paragraph [0050] | 14-15 |
| A | | 1-13, 16 |
| A | WO 2020/246394 A1 (NIPPON ZEON CO.) 10 December 2020 (2020-12-10) | 1-16 |
| A | JP 2018-530860 A (LG CHEM, LTD.) 18 October 2018 (2018-10-18) | 1-16 |
| A | US 2020/0388808 A1 (SAMSUNG SDI CO., LTD.) 10 December 2020 (2020-12-10) | 1-16 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **26 September 2023** | **03 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

| | | INTERNATIONAL SEARCH REPORT<br>Information on patent family members | | International application No.<br>**PCT/JP2023/025323** |
|---|---|---|---|---|

| Patent document<br>cited in search report | | | Publication date<br>(day/month/year) | Patent family member(s) | | | Publication date<br>(day/month/year) |
|---|---|---|---|---|---|---|---|
| JP | 2020-191179 | A | 26 November 2020 | (Family: none) | | | |
| JP | 2021-157895 | A | 07 October 2021 | (Family: none) | | | |
| WO | 2020/246394 | A1 | 10 December 2020 | US | 2022/0231378 | A1 | |
| | | | | EP | 3979354 | A1 | |
| | | | | CN | 113906626 | A | |
| | | | | KR | 10-2022-0016457 | A | |
| JP | 2018-530860 | A | 18 October 2018 | US | 2018/0123106 | A1 | |
| | | | | WO | 2017/034353 | A1 | |
| | | | | KR | 10-2017-0024574 | A | |
| | | | | CN | 108260363 | A | |
| US | 2020/0388808 | A1 | 10 December 2020 | EP | 3748730 | A1 | |
| | | | | KR | 10-2020-0140637 | A | |
| | | | | CN | 112054150 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014017651 A
- JP 2011512005W B
- WO 2020067208 A
- JP 2018535534W B
- JP 2015099777 A
- JP 2015099776 A
- WO 2021006357 A

**Non-patent literature cited in the description**

- Polymer Handbook. Wiley-Interscience Publication